# EUROPEAN PATENT APPLICATION

(11) **EP 4 832 109 A1**
(43) Date of publication of application: **28.10.2026**
(21) Application number: 26173192.1
(22) Date of filing: 17.04.2026
(51) Int. Cl.: H01M 4/525, H01M 4/36, H01M 4/131, H01M 4/1391, H01M 10/0525, H01M 4/02

(54) **POSITIVE ELECTRODE ACTIVE MATERIAL, PREPARATION METHOD OF POSITIVE ELECTRODE ACTIVE MATERIAL, AND RECHARGEABLE LITHIUM BATTERIES**

(30) Priority: 24.04.2025 KR 20250053723; 24.04.2025 KR 20250053724; 03.04.2026 KR 20260060983; 15.04.2026 KR 20260068348
(71) Applicant: Samsung SDI Co., Ltd., Yongin-si, Gyeonggi-do 17084 (KR)
(72) Inventor: KIM, Teayeop, 17084 Yongin-si (KR); KIM, Jinyoung, 17084 Yongin-si (KR); HWANG, Hoseong, 17084 Yongin-si (KR); LEE, Jongjin, 17084 Yongin-si (KR); JI, Seorin, 17084 Yongin-si (KR)
(74) Representative: Maiwald GmbH

(57) **Abstract**

A positive electrode active material includes core particles including a lithium transition metal composite compound. Coating layers are disposed on the surfaces of the core particles, with the coating layers including graphene having a layered structure of 2 to 50 layers.

## Description

### BACKGROUND

### 1. Field

Positive electrode active materials, preparation methods of positive electrode active materials, and rechargeable lithium batteries are disclosed.

### 2. Description of the Related Art

Portable information devices such as cell phones, laptops, and smart phones, use rechargeable lithium batteries. Electric vehicles also use rechargeable lithium batteries having high energy density as a driving power source.

Further research has been conducted for using rechargeable lithium batteries with high energy density as a driving power source for hybrid or electric vehicles or power storage or power source. For example, attempts have been made to increase an amount of positive electrode active materials to improve the energy density of rechargeable lithium batteries.

By adding a binder during the manufacture of the positive electrode plate, the adhesive strength of the positive electrode plate (i.e., the adhesive strength between the positive electrode current collector and the positive electrode active material) is improved. The adhesion prevents the active material from being detached from the current collector and improves the conductivity of the positive electrode. However, as the amount of binder increases to provide sufficient binding force between the current collector and the active material, the amount of the active material decreases, which causes problems in that the capacity and energy density of the battery decrease.

In addition, a polymer such as polyvinyl alcohol, polyvinyl chloride, and polyvinyl fluoride are generally used as a binder. But such binders are relatively expensive, which has the disadvantage of increasing the manufacturing cost of the battery.

### SUMMARY

Embodiments of the present disclosure provide a positive electrode active material capable of improving adhesive strength and conductivity of an electrode plate while ensuring economic efficiency and high capacity, a method of manufacturing the positive electrode active material, and a rechargeable lithium battery.

In some examples, a positive electrode active material includes core particles including a lithium transition metal composite compound; and coating layers disposed on the surfaces of the core particles, with the coating layers including graphene having a layered structure of 2 to 50 layers.

In some examples, a method of preparing a positive electrode active material includes preparing core particles including a lithium transition metal composite compound; preparing graphite particulates having an average size of less than or equal to about 2.5 µm; and mixing the core particles and the graphite particulates to obtain a positive electrode active material.

In some examples, a rechargeable lithium battery includes a positive electrode including a current collector and a positive electrode active material layer on the current collector, wherein the positive electrode active material layer includes the positive electrode active material; a negative electrode; and an electrolyte.

The positive electrode active material according to some embodiments is very economic and has high capacity characteristics. Further, with the positive electrode active material, the adhesive strength and conductivity of the electrode plate may be maximized. In addition, the positive electrode and rechargeable lithium battery including the positive electrode active material may have improved energy density.

A method of manufacturing a positive electrode active material according to some embodiments may provide a positive electrode active material achieving excellent capacity characteristics and adhesive strength of an electrode plate while minimizing the manufacturing cost.

### BRIEF DESCRIPTION OF THE DRAWINGS

FIG.1 is a schematic perspective view of a cylindrical rechargeable lithium battery.
FIG. 2 is a cross-sectional view of a prismatic rechargeable lithium battery.
FIGS. 3 and 4 are schematic exploded perspective views of a pouch-type rechargeable lithium battery.
FIG. 5 is a scanning electron microscope image of a surface of the flake graphite used in the preparation of the positive electrode active material of Example 1.
FIG. 6 is a scanning electron microscope image of a surface of graphite particulates obtained by pulverizing the flake graphite.
FIG. 7 is a scanning electron microscope image of a surface of the carbon nanotube raw material used in the preparation of the positive electrode active material of Example 4.
FIG. 8 is a scanning electron microscope image of a surface of carbon nanotube obtained by pulverizing the carbon nanotube raw material.
FIG. 9 is a scanning electron microscope image of a surface of a coating raw material used in the preparation of the positive electrode active material of Example 5, in which graphite particulates and carbon nanotube are complexed.
FIG. 10 is a scanning electron microscope image of a surface of the positive electrode active material prepared in Example 1.
FIG. 11 is a scanning electron microscope image of a surface of the positive electrode active material prepared in Comparative Example 1.
FIG. 12 is a scanning electron microscope image of a surface of the positive electrode active material prepared in Comparative Example 3.
FIG. 13 is a scanning electron microscope image of a surface of the positive electrode active material prepared in Comparative Example 4.
FIG. 14 is a scanning electron microscope image of a surface of the positive electrode active material prepared in Comparative Example 5.
FIG. 15 is a transmission electron microscope image of a cross-section of the coating layer of the positive electrode active material prepared in Example 1.
FIG. 16 is a transmission electron microscope image of a cross-section of the coating layer of the positive electrode active material prepared in Comparative Example 1.
FIG. 17 is a scanning electron microscope image of a surface of the positive electrode active material prepared in Example 4.
FIG. 18 is a scanning electron microscope image of a surface of the positive electrode active material prepared in Example 5.
FIG. 19 is a scanning electron microscope image of a surface of the positive electrode active material prepared in Comparative Example 6.

### DETAILED DESCRIPTION

Hereinafter, specific embodiments will be described in detail so that those of ordinary skill in the art can easily implement them. However, this disclosure may be embodied in many different forms and is not limited to the embodiments set forth herein.

The terminology used herein is used to describe embodiments only, and is not intended to limit the present disclosure. A singular expression includes a plural expression unless the context clearly dictates otherwise.

"Combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter means a diameter (D₅₀) of particles having a cumulative volume of 50 volume% in the particle size distribution that is obtained by measuring the size (diameter or long axis length) of 20 particles at random in a scanning electron microscope image, each particle being assumed to have a spherical shape and the measured size being converted into an equivalent spherical diameter.

Herein, "or" is not to be construed as an exclusive meaning, for example, "A or B" is construed to include A, B, A+B, and the like.

"Metal" includes ordinary metals, transition metals and metalloids (semi-metals).

### Positive Electrode Active Material

A positive electrode active material according to some embodiments includes core particles including a lithium transition metal composite compound; and coating layers disposed on the surfaces of the core particles, with the coating layers including graphene having a layered structure of about 2 to about 50 layers.

In general, a positive electrode is manufactured by adding a binder and a conductive material to improve adhesive strength between a positive electrode current collector and a positive electrode active material and improve conductivity of the positive electrode. But there is a problem that with larger amounts of the binder and the conductive material, there is a smaller amount of the positive electrode active material, which decreases energy density of a battery. However, the positive electrode active material according to embodiments of the present disclosure includes the coating layer containing graphene with a layered structure of about 2 to about 50 layers, wherein even though a low amount of carbon material may be coated on the surface of the active material particles, the adhesive strength and the conductivity may be increased. Accordingly, even though the binder and the conductive material are used in small amounts in the manufacture of the positive electrode, high adhesive strength and conductivity of the electrode plate may be provided. In addition, as the amounts of the binder and the conductive material used in the manufacture of the positive electrode are reduced, the amount of the positive electrode active material may be increased as much, thereby providing for high capacity and high energy density in a rechargeable lithium battery including the positive electrode active material.

On the other hand, if the coating layer is provided by using a crystalline carbon material with low dispersibility, there is a problem that the carbon material may be clumped together, which makes it difficult to provide the coating layers evenly on the surfaces of the core particles. However, the positive electrode active material according to some embodiments may have a coating layer with a thin and uniform thickness by appropriately selecting the crystalline carbon material from which the coating layer is derived, and by performing the coating under appropriate conditions. The coating layer has a layered structure, which exhibits a dense crystal structure, and includes crystalline carbon provided in a two-dimensional plane on the surfaces of the core particles. Accordingly, the resistivity of the positive electrode active material is lowered and electronic conductivity is improved. Thus, lithium ions may be more effectively intercalated and deintercalated and diffused along the layered structure, thereby improving ionic conductivity. Even if a positive electrode including such a positive electrode active material includes little or no separate conductive material, the positive electrode may have excellent electronic conductivity and low resistance. And even if the positive electrode includes a very small amount of the binder, the positive electrode may have high electrode plate adhesive strength. A rechargeable lithium battery including such a positive electrode may have high capacity and energy density and overall improved electrochemical performance such as charge and discharge efficiency, rate capability, etc.

A method of using graphene as a raw material to induce the coating layer containing graphene on the surface of the core particles of the positive electrode active material has been proposed. But such a method has limitations in commercialization due to its complex and expensive coating process, and it is difficult to provide a film-type coating layer with a uniform thickness on the surface of the core particles with such a method. In addition, techniques for coating amorphous carbon on the surfaces of the core particles have also been proposed but it is difficult to provide a uniform coating and increased energy density with such methods, and it is also difficult to increase electronic conductivity of the positive electrode and lower its resistance. The positive electrode active material according to some embodiments introduces a uniform film-type graphene layer having about 2 atomic layers to about 50 atomic layers or a thickness of several to tens of nanometers on the surfaces of the core particles. As compared with the cases of coating amorphous carbon or conventional crystalline carbon, the positive electrode active material of the present disclosure may have very high electronic conductivity and ionic conductivity, increased energy density, while lowering resistance, and provide for excellent electrochemical performance. In addition, the positive electrode active material of embodiments uses graphite, a low-cost material, and is provided with a dry coating method that is advantageous for cost reduction, good processibility, and mass production.

Hereinafter, the configuration of the positive electrode active material according to some embodiments of the present disclosure is described in detail.

### Core Particles

The core particles include a lithium transition metal composite compound. The lithium transition metal composite compound may include, for example, a lithium nickel-based oxide, a lithium cobalt-based oxide, a lithium manganese-based oxide, a lithium iron phosphate-based compound, a cobalt-free lithium nickel-manganese-based oxide, a lithium-manganese-rich composite oxide, or a combination thereof.

In some examples, the lithium transition metal composite compound of the core particles may be a compound represented by any one of the following chemical formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8). In these chemical formulas, A is at least one of Ni, Co, and Mn; X is at least one of Al, Ni, Co, Mn, Cr, Fe, Mg, Sr, V, and rare earth elements; D is at least one of F, S, and P; G is at least one of Al, Cr, Mn, Fe, Mg, La, Ce, Sr, and V; and L¹ is at least one of Mn and Al.

In further examples, the lithium transition metal composite compound of the core particles may be a lithium cobalt-based oxide represented by Chemical Formula 1, a lithium nickel-based oxide represented by Chemical Formula 2, a lithium iron phosphate-based compound represented by Chemical Formula 3, a cobalt-free lithium nickel-manganese-based oxide represented by Chemical Formula 4, or a combination thereof.

[Chemical Formula 1] Liₐ₁Coₓ₁M¹_{y1}O_{2-b1}X_{b1}

In Chemical Formula 1, 0.9≤a1 ≤1.8, 0.7≤x1≤1, 0≤y1≤0.3, 0.9≤x1+y1 ≤ 1.1, and 0≤b1≤0.1, M¹ is at least one of Al, B, Ba, Ca, Ce, Cr, Cu, Fe, Mg, Mn, Mo, Ni, Se, Si, Sn, Sr, Ti, V, W, Y, Zn, and Zr, and X is at least one of F, P, and S.

[Chemical Formula 2] Liₐ₂Niₓ₂M²_{y2}M³_{z2}O_{2-b2}X_{b2}

In Chemical Formula 2, 0.9≤a2≤1.8, 0.3≤x2≤1, 0≤y2≤0.7, 0≤z2≤0.7, 0.9≤x2+y2+z2≤1.1, and 0≤b2≤0.1, M² and M³ are each independently at least one of Al, B, Ba, Ca, Ce, Co, Cr, Cu, Fe, Mg, Mn, Mo, Nb, Si, Sn, Sr, Ti, V, Y, W, and Zr, and X is at least one of F, P, and S. In further embodiments with Chemical Formula 2, 0.6≤x2≤1, 0≤y2≤0.4, and 0≤z2≤0.4; 0.8≤x2≤1, 0≤y2≤0.2, and 0≤z2≤0.2; 0.4≤x2≤1, 0≤y2≤0.6, and 0≤z2≤0.6; 0.5≤x2≤1, 0≤y2≤0.5, and 0≤z2≤0.5; 0.4≤x2≤0.8, 0≤y2≤0.2, and 0≤z2≤0.4; or 0.4≤x2≤0.6, 0≤y2≤0.2, and 0≤z2≤0.3.

[Chemical Formula 3] Liₐ₃Feₓ₃M⁴_{y3}PO_{4-b3}X_{b3}

In Chemical Formula 3, 0.9≤a3≤1.8, 0.6≤x3≤1, 0≤y3≤0.4, and 0≤b3≤0.1, M⁴ is one or more of Al, B, Ba, Ca, Ce, Co, Cr, Cu, Mg, Mn, Mo, Ni, Se, Si, Sn, Sr, Ti, V, W, Y, Zn, and Zr, and X is at least one of F, P, and S.

[Chemical Formula 4] Liₐ₄Niₓ₄Mn_{y4}M⁵_{z4}O_{2-b4}X_{b4}

In Chemical Formula 4, 0.9≤a4≤1.8, 0.8≤x4<1, 0<y4≤0.2, 0≤z4≤0.2, 0.9≤x4+y4+z4≤1.1, and 0≤b4≤0.1, M⁵ is at least one of Al, B, Ba, Ca, Ce, Cr, Fe, Mg, Mo, Nb, Si, Sn, Sr, Ti, V, W, Y, and Zr, and X is at least one of F, P, and S.

In some examples, the lithium transition metal composite compound of the core particles may include a lithium cobalt-based oxide represented by Chemical Formula 1. In such cases, high-voltage design of rechargeable lithium batteries with reduced gas generation at high voltage may be possible. Thus, the reliability and safety of the rechargeable lithium batteries may be improved, and battery resistance may be suppressed by achieving a synergistic effect in a rapid charging system.

In other examples, the lithium transition metal composite compound of the core particles may include a lithium nickel-based oxide represented by Chemical Formula 2. In such cases, rechargeable lithium batteries with high capacity and high energy density may be implemented.

When the lithium transition metal composite compound of the core particles is a lithium nickel-based oxide, the positive electrode active material may be mid nickel-based positive electrode active material. Here, based on 100 mol% of a total metal excluding lithium in the lithium nickel-based oxide of the core particles, nickel may be included in an amount of about 40 mol% to about 80 mol%, for example, about 45 mol% to about 75 mol%, about 50 mol% to about 70 mol%, about 50 mol% to about 65 mol%, or about 55 mol% to about 65 mol%. When the amount of nickel is in these ranges, rechargeable lithium batteries may be operable at a high voltage while having reduced side reactions with an electrolyte, which thereby prevents mechanical degradation or electrochemical degradation at high voltage, and thus provides for long cycle-life characteristics.

When the positive electrode active material is mid nickel-based positive electrode active material, based on 100 mol% of a total metal excluding lithium in the lithium nickel-based oxide of the core particles, cobalt may be included in an amount of about 5 mol% to about 30 mol%, for example, about 7 mol% to about 28 mol%, about 8 mol% to about 25 mol%, or about 10 mol% to about 20 mol%. When the amount of cobalt is in these ranges, rechargeable lithium batteries may be operable at a high voltage without mechanical degradation or electrochemical degradation at high voltage, and, thus, may have long cycle-life characteristics.

When the positive electrode active material is mid nickel-based positive electrode active material, based on 100 mol% of a total metal excluding lithium in the lithium nickel-based oxide of the core particles, manganese may be included in an amount of about 10 mol% to about 50 mol%, for example, about 15 mol% to about 45 mol%, about 20 mol% to about 40 mol%, or about 25 mol% to about 35 mol%. When the amount of manganese is in these ranges, rechargeable lithium batteries may be operable at a high voltage without mechanical degradation or electrochemical degradation at high voltage, and, thus, may have long cycle-life characteristics.

When the lithium transition metal composite compound of the core particles is a lithium nickel-based oxide, the positive electrode active material may be high nickel-based positive electrode active material. For example, based on 100 mol% of a total metal excluding lithium in the lithium nickel-based oxide of the core particles, nickel may be included in an amount of greater than or equal to about 80 mol%, for example, greater than or equal to about 85 mol%, greater than or equal to about 90 mol%, greater than or equal to about 91 mol%, or greater than or equal to about 94 mol%, and less than or equal to about 99 mol%. In such cases, the core particles may be a high-nickel positive electrode active material. Because high-nickel positive electrode active material may have high capacity, high capacity and high density in rechargeable lithium batteries may be provided.

When the lithium transition metal composite compound of the core particles is a lithium nickel-based oxide, the core particles may be in the form of secondary particles. Because the secondary particles are formed by closely cohering primary particles, the secondary particles may be spherical, ellipsoidal, polyhedral, or irregularly shaped, and the primary particles constituting the secondary particles may be spherical, ellipsoidal, plate-shaped, or a combination thereof.

When the lithium transition metal composite compound of the core particles is a lithium nickel-based oxide and the core particles are in the form of secondary particles, an average particle diameter (D₅₀) of the secondary particles in the core particles may be about 6 µm to about 25 µm, for example, about 6 µm to about 23 µm, about 7 µm to about 20 µm, or about 8 µm to about 15 µm. An average size of the primary particles constituting the secondary particles may be about 10 nm to about 1 µm, for example, about 10 nm to about 800 nm, about 20 nm to about 500 nm, or about 50 nm to about 200 nm. Here, the average particle diameter (D₅₀) of the secondary particles may be obtained by randomly selecting 20 particles from a scanning electron microscope image of the secondary particles, each particle being assumed to have a spherical shape and the measured size being converted into an equivalent spherical diameter, measuring their particle diameters (diameter, long diameter, or long axis length) to obtain a particle size distribution, and then taking the size of particles having a cumulative volume of 50 vol% from the particle size distribution as the average particle diameter. In addition, the size of the primary particles constituting the secondary particles may be measured through electron backscatter diffraction (EBSD) analysis. The EBSD measuring equipment may be, for example, Bruker QUANTAX EBSD, and the sample may be ion-milled using CP (Cross-sectional Polisher, Ilion+, Gatan). EBSD may be measured at an acceleration voltage of 20 keV using Bruker's e-flash HR EBSD detector. In EBSD analysis, each grain (i.e., primary particle) may be represented in a different color in the electron microscope image of a cross-section of the secondary particles, and a cross-sectional area of one grain may be measured to derive a circle with the same area, and the diameter of this circle may be calculated as the size of the corresponding grain. In this way, the sizes of grains captured in the image may be measured, and their arithmetic mean may be calculated as the average size of the primary particles measured by EBSD.

The average particle diameter (D₅₀) of the core particles may be about 1 µm to about 25 µm, about 3 µm to about 22 µm, or about 10 µm to about 18 µm. When the average particle diameter (D₅₀) of the core particles is in these ranges, the adhesive strength of the positive electrode active material to the current collector (i.e., the adhesive strength of the electrode plate) is improved, thereby enhancing the structural stability of the positive electrode active material. In addition, the stability of the positive electrode slurry and the mixture density of the electrode plate may be improved in the positive electrode manufacturing process. Further, because the path that lithium ions travel before reaching the surface of the positive electrode active material is longer, the formation of impurities on the surface of the positive electrode active material may be minimized. Accordingly, problems that may arise due to surface impurities, such as a decrease in battery capacity, an increase in interfacial resistance due to obstruction of lithium ion movement, gas generation due to decomposition of impurities, and swelling of the battery, may be prevented. As a result, the capacity characteristics, high-temperature stability, and charge-discharge characteristics of a rechargeable lithium battery including a positive electrode active material may be improved. Here, the average particle diameter (D₅₀) of the core particles may be obtained by randomly selecting 20 particles from a scanning electron microscope image of the core particles, each particle being assumed to have a spherical shape and the measured size being converted into an equivalent spherical diameter, measuring the particle diameters (diameter, long diameter, or long axis length) to obtain a particle size distribution, and then taking the size of particles having a cumulative volume of 50 vol% from the particle size distribution as the average particle diameter.

The core particles may include first particles having an average particle diameter (D₅₀) of about 9 µm to about 40 µm, and second particles having an average particle diameter (D₅₀) of about 1 µm to about 8 µm. Here, the first particles with a relatively large average particle diameter may be expressed as large particles, and the second particles with a relatively small average particle diameter may be expressed as small particles. Because the positive electrode active material includes both large and small particles, capacity and energy density may be maximized and long cycle-life characteristics may be implemented.

The average particle diameter (D₅₀) of the first particles may be about 10 µm to about 38 µm, about 11 µm to about 35 µm, or about 12 µm to about 32 µm. Here, the average particle diameter (D₅₀) of the first particles may be obtained by randomly selecting 20 particles from a scanning electron microscope image of the first particles, each particle being assumed to have a spherical shape and the measured size being converted into an equivalent spherical diameter, measuring the particle diameters (diameter, long diameter, or long axis length) to obtain a particle size distribution, and then taking the size of particles having a cumulative volume of 50 vol% from the particle size distribution as the average particle diameter.

An average particle diameter (D₅₀) of the second particles may be about 1.5 µm to about 7.5 µm, about 1.8 µm to about 7.2 µm, or about 2.0 µm to about 7.0 µm. Here, the average particle diameter (D₅₀) of the second particles may be obtained by randomly selecting 20 particles from a scanning electron microscope image of the second particles, each particle being assumed to have a spherical shape and the measured size being converted into an equivalent spherical diameter, measuring the particle diameters (diameter, long diameter, or long axis length) to obtain a particle size distribution, and then taking the size of particles having a cumulative volume of 50 vol% from the particle size distribution as the average particle diameter.

### Coating Layer

The coating layers are located on the surfaces of the core particles, and each of the coating layers includes graphene having a layered structure of 2 to 50 layers. With the coating layers, even when a small amount of binder and conductive material is used in the manufacture of the positive electrode, adhesive strength and conductivity of the electrode plate may be secured. In addition, as the amount of the binder or conductive material used in the manufacture of the positive electrode decreases, the amount of the positive electrode active material may increase such that the rechargeable lithium battery can exhibit high capacity and high energy density characteristics. In addition, the coating layer has a layered structure exhibiting a dense crystal structure, includes crystalline carbon provided in a two-dimensional plane on the surface of the core particles, and may have a thin and uniform thickness. Accordingly, the electronic conductivity of the positive electrode active material may be improved and the interfacial resistance may be reduced, the intercalation and deintercalation of lithium ions may be more effectively performed, and the ionic conductivity may be improved because the lithium ions diffuse along the layered structure.

The layered structure of 2 to 50 layers may be expressed as a layered structure of 2 to 50 atomic layers. For example, the coating layer may include graphene having a layered structure of 2 to 48 layers, 5 to 45 layers, 7 to 40 layers, 10 to 35 layers, 15 to 35 layers, 20 to 35 layers, or 25 to 35 layers. The number of layers in the layered structure may be measured from high-resolution transmission electron microscopy (HR-TEM) images of the positive electrode active material particles.

The interlayer spacing (d₀₀₂) of the layered structure may be about 0.320 nm to about 0.350 nm, for example, about 0.325 nm to about 0.348 nm, about 0.328 nm to about 0.345 nm, or about 0.330 nm to about 0.342 nm. When the interlayer spacing (d₀₀₂) of the layered structure is in these ranges, the positive electrode active material may further improve adhesive strength and conductivity of the electrode plate. Here, the interlayer spacing (d₀₀₂) may be measured by a method known to those skilled in the art. For example, the interlayer spacing (d₀₀₂) of the layered structure may be measured by obtaining the peak of the (002) plane through X-ray diffraction (XRD) of the coating layer and then analyzing the peak of the (002) plane. Here, the (002) plane represents the range of 25.0° < 2θ < 27.0°, where 2θ represents the diffraction angle. For example, XRD measurement data may be subjected to noise removal (baseline setting), and the like, using a conventional program equipped in the XRD device as a data processing and analysis program. Additionally, the peak profile of the peak on the (002) plane may be fitted with a conventional fitting function such as a Gaussian function, a Lorenz function, and the like. Further, the interlayer spacing (d₀₀₂) of the layered structure may be expressed, for example, by a method of measuring the interlayer spacing (d₀₀₂) of graphite particulates, and the interlayer spacing (d₀₀₂) of graphite particulates may be measured through XRD analysis of the graphite particulates. The number of layers in the layered structure, the interlayer spacing (d₀₀₂), and the thickness of the coating layer are determined as average values obtained from measurements at multiple randomly selected locations on the cross-section of the core particles via HR-TEM. It is noted that the correlation between these parameters follows the physical characteristics of the graphene coating, where the total thickness of the coating layer is the product of the number of layers and the average interlayer spacing.

The graphene of the coating layer may have a ratio (I_{D}/I_{G}) of the peak intensity (I_{D}) around 1350 cm⁻¹ to the peak intensity (I_{G}) around 1580 cm⁻¹ in a Raman spectrum of about 0.15 to about 0.50, for example, about 0.15 to about 0.45, about 0.18 to about 0.45, or about 0.20 to about 0.40. When the I_{D}/I_{G} value of the graphene is in these ranges, the positive electrode active material may maximize adhesive strength and conductivity of the electrode plate. For instance, the Raman spectra may be measured using a Raman spectrometer (e.g., ICRM7000 (Renishaw), etc.) under the conditions of a laser wavelength of about 632 nm and a lowest Raman shift of about 946 cm⁻¹. The peak intensity ratios described herein are obtained from peaks observed in the Raman shift range starting from the lowest Raman shift of about 946 cm⁻¹. These measurement conditions are standard in the art, and it would be within the ability of a person skilled in the art to adjust these parameters, such as laser power or exposure time, while maintaining the relative trend of the peak intensity ratios, to ensure reproducibility.

The graphene in the coating layer may be derived from graphite particulates having an average size of less than or equal to about 2.5 µm. In such cases, the coating layer may be provided with a uniform thickness on the surfaces of the core particles, and accordingly, the adhesive strength of the positive electrode active material to the current collector and conductivity of the electrode plate may be maximized. Further, the structural stability of the positive electrode active material is improved, side reactions with the electrolyte may be effectively suppressed, the amount of gas generated under high voltage and high temperature conditions may be reduced, and long cycle-life characteristics may be realized.

When being mixed with the core particles, under the function of a shear force, the graphite particulates including a considerable number of graphene layers may be delaminated to form coating layers including a layered structure having about 2 to about 50 graphene layers on the surfaces of the core particles.

The graphite particulates may be plate-shaped particles. The average size (D₅₀) of the graphite particulates may be less than or equal to about 2.5 µm, for example, less than or equal to about 1.5 µm, less than or equal to about 1.0 µm, less than about 1 µm, less than or equal to about 0.8 µm, less than or equal to about 0.5 µm, less than or equal to about 0.4 µm, or less than or equal to about 0.3 µm, may be greater than or equal to about 0.01 µm, greater than or equal to about 0.05 µm, greater than or equal to about 0.08 µm, or greater than or equal to about 0.1 µm. When the average size of the graphite particulates is in these ranges, coating layers may be provided with a uniform thickness on the surfaces of the core particles, and the positive electrode active material may maximize adhesive strength and conductivity of the electrode plate. Here, the average size (D₅₀) of the graphite particulates may be measured through a particle size analyzer and refers to the size of particles having a cumulative volume of 50 vol% in the particle size distribution. The particle size here may mean a length of the longest axis in the plane direction perpendicular to the thickness direction in the plate shape.

The thickness of the graphite particulates may be less than or equal to about 1.0 µm, for example, less than about 1 µm, less than or equal to about 0.9 µm, less than or equal to about 0.7 µm, or less than or equal to about 0.5 µm, and may be greater than or equal to about 0.01 µm, greater than or equal to about 0.05 µm, or greater than or equal to about 0.08 µm. When the thickness of the graphite particulates is in these ranges, coating layers may be provided with uniform thicknesses on the surfaces of the core particles, and the positive electrode active material may achieve maximized adhesive strength and conductivity of the electrode plate. Here, the thickness of the graphite particulates may be measured through a transmission electron microscope for the graphite particulates. Alternatively, the thickness of the graphite particulates may be measured via transmission electron microscopy of a cross-section of the graphite particulates cut by focused ion beam (FIB). However, the present disclosure is not limited thereto, and the thickness of the graphite particulates may be measured through, for example, SEM (scanning electron microscopy), TOF-SIMS (time-of-flight secondary ion mass spectrometry), XPS (X-ray photoelectron spectroscopy), AFM (atomic force microscopy), or EDS (energy-dispersive spectroscopy) analysis, and may be measured through a TEM-EDS (transmission electron microscopy - energy dispersive spectroscopy) line profile.

The graphite particulates may have a ratio (I_{D}/I_{G}) of the peak intensity (I_{D}) around 1350 cm⁻¹ to the peak intensity (I_{G}) around 1580 cm⁻¹ in a Raman spectrum of about 0.15 to about 0.50, for example, about 0.15 to about 0.45, about 0.18 to about 0.45, or about 0.20 to about 0.40. When the I_{D}/I_{G} value of the graphite particulates is in these ranges, coating layers may be provided with uniform thicknesses on the surfaces of the core particles, and adhesive strength and conductivity of the electrode plate may be maximized.

Based on 100 wt% of the total positive electrode active material, the graphene of the coating layer may be included in an amount of about 0.02 wt% to about 3.0 wt%, for example, about 0.02 wt% to about 2.8 wt%, about 0.03 wt% to about 2.5 wt%, about 0.05 wt% to about 2.0 wt%, about 0.1 wt% to about 2.0 wt%, about 0.2 wt% to about 2.0 wt%, about 0.2 wt% to about 1.0 wt%, or about 0.2 wt% to about 0.8 wt%. Here, the amount of graphene in the coating layer may be expressed as the amount of the coating layer. When the amount of the graphene is in these ranges, the high-capacity and high-energy density characteristics of a rechargeable lithium battery can be improved while also providing adhesive strength and conductivity of the electrode plate. Even if an amount of the graphene is a very small amount of less than about 1 wt%, it may be well coated on the surfaces of the particles, thereby increasing the electrical conductivity of the positive electrode active material, increasing a lubrication, and increasing the density of the positive electrode.

The coating layer may further include carbon nanotubes in addition to the graphene. In this case, because the pellet density of the positive electrode active material is further improved, the energy density of the rechargeable lithium battery including the positive electrode active material may also be maximized. When the coating layer includes both graphene and carbon nanotube, the powder resistance of the positive electrode active material may be further reduced such that the electrical conductivity of the positive electrode active material may be maximized.

When the coating layer further includes carbon nanotubes, graphene may be coated in a sheet shape on the surfaces of the core particles, and the carbon nanotubes may be strongly adhered within the sheet or on a surface of the sheet. That is, both of the graphene and the carbon nanotubes may be uniformly coated on the surfaces of the core particles so that the positive electrode active material may have lubricity while also maximizing the electronic conductivity.

The graphene and the carbon nanotube may be complexed (e.g., attached) with each other on a single sheet plane. For example, when graphene is coated in a sheet shape on the surfaces of the core particles, fibrous shaped carbon nanotubes may be positioned on the graphene of sheet shape. In some examples, the positive electrode active material may include a first coating layer located on the surfaces of the core particles and including graphene having a layered structure of 2 to 50 layers, and a second coating layer located on the first coating layer and including carbon nanotubes.

The carbon nanotubes may include at least one of single-walled carbon nanotube (SWCNT), thin-walled carbon nanotube (TWCNT), and multi-walled carbon nanotube (MWCNT).

An average length of the carbon nanotubes may be about 0.1 µm to about 35 µm, for example, about 0.3 µm to about 30 µm, about 0.5 µm to about 25 µm, about 1 µm to about 20 µm, about 3 µm to about 18 µm, or about 5 µm to about 15 µm. When the average length of the carbon nanotubes is in these ranges, the carbon coating layer may be provided with a uniform thickness on the surface of the core particles, and pellet density and conductivity of the positive electrode active material may be maximized. Here, the length of a carbon nanotube refers to the length of a major axis passing through the center of a carbon nanotube unit. The average length of the carbon nanotubes may be obtained, for example, by randomly selecting about 20 carbon nanotubes from SEM or TEM image, measuring the lengths, and calculating an average value.

An average diameter of the carbon nanotubes may be about 1 nm to about 50 nm, for example, about 1 nm to about 40 nm, about 1.5 nm to about 30 nm, about 1.8 nm to about 20 nm, or about 2 nm to about 15 nm. Here, the diameter of a carbon nanotube refers to the length of a minor axis passing through the center of a carbon nanotube unit and being perpendicular to the major axis of the carbon nanotube. The average diameter of the carbon nanotubes may be obtained, for example, by randomly selecting about 20 carbon nanotubes from SEM or TEM image, measuring the diameters, and calculating an average value.

Based on 100 wt% of the total positive electrode active material, the carbon nanotubes of the carbon coating layer may be included in an amount of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.8 wt%, about 0.05 wt% to about 0.5 wt%, about 0.1 wt% to about 0.5 wt%, or about 0.2 wt% to about 0.4 wt%. When the amount of the carbon nanotubes of the carbon coating layer is in these ranges, the capacity and energy density of the rechargeable lithium battery may be improved.

When the coating layer further includes carbon nanotubes, based on a total of 100 wt% of the positive electrode active material, the graphene of the carbon coating layer may be included in an amount of about 0.02 wt% to about 3.0 wt%, and the carbon nanotubes of the carbon coating layer may be included in an amount of about 0.02 wt% to about 3.0 wt%. For example, based on a total of 100 wt% of the positive electrode active material, the graphene of the carbon coating layer may be included in an amount of about 0.05 wt% to about 2.0 wt% and the carbon nanotubes may be included in an amount of about 0.05 wt% to about 2.0 wt%, based on a total of 100 wt% of the positive electrode active material. Further, based on a total of 100 wt% of the positive electrode active material, the graphene may be included in an amount of about 0.05 wt% to about 0.5 wt% and the carbon nanotubes may be included in an amount of about 0.05 wt% to about 0.5 wt%. Further, based on a total of 100 wt% of the positive electrode active material, the graphene may be included in an amount of about 0.05 wt% to about 0.1 wt% and the carbon nanotubes may be included in an amount of about 0.1 wt% to about 0.5 wt%.

The coating layers may be in the form of films that continuously surrounds the surfaces of the core particles, or, for example, may be in the form of shells that surround the entire surfaces of the core particles. This is distinct from a structure in which only portions of the surfaces of the core particles are coated. When the coating layers are provided to completely cover the surfaces of the core particles, the adhesive strength of the electrode plate and conductivity may be maximized. Further, the positive electrode active material has improved structural stability without increasing resistance or decreasing capacity, may effectively suppress side reactions with the electrolyte, may reduce gas generation under high voltage and high temperature conditions, and may provide long cycle-life characteristics.

Thicknesses of the coating layers may be about 3 nm to about 50 nm, for example, about 3 nm to about 45 nm, about 3 nm to about 40 nm, about 3 nm to about 35 nm, about 3 nm to about 30 nm, about 4 nm to about 20 nm, or about 5 nm to about 15 nm. When the thicknesses of the coating layers s are in these ranges, the structural stability of the positive electrode active material may be improved and side reactions with the electrolyte may be effectively suppressed without increasing resistance or decreasing capacity due to the coating layer. The thicknesses of the coating layers may be measured, for example, using a transmission electron microscope on a cross-section of the positive electrode active material particle cut by FIB (focused ion beam). However, the present disclosure is not limited thereto, and the thickness of the coating layer may be measured through, for example, SEM, AFM, TOF-SIMS, XPS, or EDS analysis, and may be measured through a TEM-EDS line profile.

The coating layers may be thin, on the order of several to tens of nanometers in thickness, but yet uniform in thickness. For example, a difference between the highest and lowest thicknesses of the coating layers may be less than or equal to about 30 nm, for example, less than or equal to about 25 nm, less than or equal to about 20 nm, or less than or equal to about 15 nm, and greater than or equal to about 0.30 nm, greater than or equal to about 0.33 nm, greater than or equal to about 0.35 nm, or greater than or equal to about 0.40 nm. A difference between the highest and lowest thicknesses of the coating layers satisfying the above ranges means that coating layers of uniform thicknesses are provided in the form of films on the surfaces of the positive electrode active material particles. As such, adhesive strength and conductivity of the electrode plate may be maximized. Here, the highest and lowest thicknesses of the coating layers may be measured based on an electron microscope image of the positive electrode active material. For example, in an electron microscope image of a cross-section of a positive electrode active material particle, the thickness of the thickest part of the cross-section of the coating layer may be defined as the highest thickness of the coating layer, and the thickness of the thinnest part may be defined as the lowest thickness of the coating layer. A thickness of the coating layer may be a vertical distance from the outer surface of the core particle to the outer surface of the coating layer. A scanning electron microscope or a transmission electron microscope may be used as an electron microscope.

### Method of Preparing Positive Electrode Active Material

A method of preparing a positive electrode active material according to some example embodiments includes preparing core particles including a lithium transition metal composite compound; preparing graphite particulates having an average size (D₅₀) of less than or equal to about 2.5 µm; and dry mixing the core particles and the graphite particulates to obtain a positive electrode active material.

In the method of preparing a positive electrode active material according to some example embodiments, a carbon coating layer including graphene having a layered structure of 2 to 50 layers may be provided on the surfaces of core particles using the graphite particulates. Accordingly, while minimizing the manufacturing cost, it is possible to secure adhesive strength and conductivity of the electrode plate even when using a small amount of binder and conductive material during the manufacturing of the positive electrode. In addition, as the amount of the binder used in the manufacture of the positive electrode decreases, the amount of the positive electrode active material may increase such that a rechargeable lithium battery including the positive electrode active material may have high capacity and high energy density characteristics.

Hereinafter, a method of preparing a positive electrode active material according to example embodiments is described in detail.

### Preparing Core Particles

Core particles including a lithium transition metal composite compound are prepared. Because the core particles may be as described above, detailed descriptions thereof are omitted.

### Preparing Graphite particulates

Graphite particulates having an average size (D₅₀) of less than or equal to about 2.5 µm are prepared. The specific properties of the graphite particulates, such as average size, and I_{D}/I_{G} values, may be the same as the graphite particulates in the aforementioned positive electrode active material, and therefore, detailed descriptions thereof are omitted.

In this process, flake graphite having an average size (D₅₀) of about 1 µm to about 25 µm, for example, about 2 µm to about 25 µm, or about 3 µm to about 25 µm may be pulverized to prepare graphite particulates having an average size (D₅₀) of less than or equal to about 2.5 µm. The average size (D₅₀) of the flake graphite may be less than or equal to about 20 µm, less than or equal to about 18 µm, less than or equal to about 15 µm, less than or equal to about 12 µm, or less than or equal to about 10 µm, and may be greater than or equal to about 4 µm, greater than or equal to about 5 µm, or greater than or equal to about 6 µm. The average size of the flake graphite may be measured from a scanning electron microscope image. The average size (D₅₀) of the flake graphite may be measured using a particle size analyzer, and refers to the size of particles having a cumulative volume of 50 vol% in the particle size distribution. The particle size means a length of the longest axis in the plane direction perpendicular to the thickness direction in the plate shape.

The flake graphite may have a ratio (I_{D}/I_{G}) of the peak intensity (I_{D}) around 1350 cm⁻¹ to the peak intensity (I_{G}) around 1580 cm⁻¹ in a Raman spectrum of greater than or equal to about 0.01 and less than about 0.15, for example, about 0.02 to about 0.14, about 0.08 to about 0.14, or about 0.1 to about 0.14.

The pulverizing of the flake graphite may be performed, for example, using a milling process. The milling process may use a method known to those skilled in the art and may utilize a device such as a ball mill, a bead mill, a jet mill, a pin mill, a roller mill, a hybrid mill, a colloid mill, or an air classifier mill (ACM).

The flake graphite may be pulverized using a ball milling method, and the ball milling may be performed using zirconia beads having a size of about 1 mm to about 25 mm at a speed of about 200 rpm to about 5,000 rpm for about 30 minutes to about 4 hours. The size of the zirconia beads used for pulverizing the flake graphite may be about 1.2 mm to about 23 mm, about 1.3 mm to about 21 mm, or about 1.5 mm to about 20 mm. The pulverizing of the flake graphite may be performed under conditions of about 250 rpm to about 4,500 rpm, about 300 rpm to about 4,000 rpm, about 400 rpm to about 3,000 rpm, or about 500 rpm to about 2,000 rpm. Additionally, the pulverizing of the flake graphite may be performed for about 30 minutes to about 3 hours, or about 30 minutes to about 2 hours. When the size of the beads, the stirring speed, or the stirring time are in these ranges, the particle size of the graphite particulates may be controlled to a desired level.

### Obtaining Positive Electrode Active Material

The core particles and the graphite particulates are mixed to prepare a positive electrode active material. In this process, crystalline carbon derived from the graphite particulates is coated on the surfaces of the core particles, thereby providing coating layers including graphene having a layered structure of 2 to 50 layers on the surfaces of the core particles. In this process, because coating layers are provided on the surfaces of the core particles with a thin and uniform thickness, adhesive strength and conductivity of the electrode plate may be secured even when using a small amount of binder and conductive material. In addition, as the amount of the binder and conductive material decreases, the amount of the positive electrode active material may increase such that the rechargeable lithium battery may have high capacity and high energy density characteristics. The coating layers provided in this process are the same as the coating layers in the positive electrode active material described above, and thus detailed descriptions thereof are omitted.

Based on 100 wt% of the total of the core particles and the graphite particulates, the graphite particulates may be mixed in an amount of about 0.02 wt% to about 3.0 wt%, for example, about 0.02 wt% to about 2.8 wt%, about 0.03 wt% to about 2.5 wt%, about 0.05 wt% to about 2.0 wt%, about 0.1 wt% to about 2.0 wt%, about 0.2 wt% to about 2.0 wt%, about 0.2 wt% to about 1.0 wt%, or about 0.2 wt% to about 0.8 wt%. When the mixing amount of graphite particulates is in these ranges, the adhesive strength and conductivity of the electrode plate may be improved, while the high-capacity and high-energy density characteristics of the rechargeable lithium battery may be improved. Even if the amount of the graphite particulates is less than about 1 wt%, the graphene may be well coated on the surfaces of the core particles, thereby increasing the electrical conductivity of the positive electrode active material, increasing lubrication, and increasing the density of the positive electrode.

This process may be performed by mixing the core particles and graphite particulates and applying a shear force. In this case, coating layers including graphene having a layered structure exhibiting a dense crystal structure may be provided while crystalline carbon derived from graphite particulates is located in a two-dimensional plane on the surfaces of the core particles. This process may be performed, for example, using a device for applying shear force such as a device having a blade inside. But the present disclosure is not limited in this regard.

This process of mixing the core particles and the graphite particulates may use a dry mixer. The core particles and the graphite particulates may be mixed at a shear rate of about 1,000 s⁻¹ to about 9,000 s⁻¹ and a blade rotation speed of less than or equal to about 20 m/s.

The core particles and the graphite particulates may be mixed at a shear rate of about 1,500 s⁻¹ to about 8,800 s⁻¹, about 2,000 s⁻¹ to about 8,800 s⁻¹, or about 2,500 s⁻¹ to about 8,500 s⁻¹. When the shear rate is in these ranges, carbon coating layers may be effectively provided on the surfaces of the core particles without damaging the core particles.

The rotation speed of the blade within the device for applying the shear force may be less than or equal to about 18 m/s, less than or equal to about 15 m/s, or less than or equal to about 10 m/s, and greater than or equal to about 3 m/s, greater than or equal to about 4 m/s, or greater than or equal to about 5 m/s. When the rotational speed of the blade is in these ranges, coating layers may be effectively provided on the surfaces of the core particles without damaging the core particles.

In this process, the core particles and graphite particulates may be mixed at a speed of about 500 rpm to about 6,000 rpm, for example, at a speed of about 600 rpm to about 5,500 rpm, about 700 rpm to about 5,000 rpm, or about 800 rpm to about 4,000 rpm. When the mixing conditions are in these ranges, coating layers may be effectively provided on the surfaces of the core particles without damaging the core particles.

The core particles and graphite particulates may be dry mixed. As such, manufacturing costs may be reduced, and because the coating layers are thin and uniform, the adhesive strength and conductivity of the electrode plate can be further improved. Here, "dry" means a state in which there is no intentional contact with a solvent such as a process solvent, or a state in which there is no intentional inclusion of a solvent. The dry mixing may be performed using a method known to those skilled in the art, for example, a dry mixer such as a Nobilta mixer, a homogenizer, or a Henschel mixer.

In the obtaining the positive electrode active material, carbon nanotubes may further be mixed with the core particles and the graphite particulates. In this case, graphene may be coated in sheets on the surfaces of the core particles, and the carbon nanotubes may be strongly adhered within the sheets or on the surfaces of the sheets. Coating layers including both the graphite particulates and the carbon nanotubes may be provided on the surfaces of the core particles, the powder resistance of the positive electrode active material may be reduced, and the pellet density and electrical conductivity of the positive electrode active material may be improved.

When the carbon nanotube is further mixed, the method may further include preparing carbon nanotubes having an average length of about 0.1 µm to about 35 µm by pulverizing the carbon nanotube raw material having an average length of greater than or equal to about 40 µm. For example, the average length of the carbon nanotube raw material may be greater than or equal to about 40 µm, greater than or equal to about 45 µm , or greater than or equal to about 50 µm, and may be less than or equal to about 100 µm, less than or equal to about 95 µm, or less than or equal to about 90 µm, and may be about 40 µm to about 100 µm, about 45 µm to about 100 µm, about 50 µm to about 100 µm, or about 50 µm to about 90 µm. Here, the length of the carbon nanotube raw material refers to the length of a major axis passing through the center of a carbon nanotube raw material unit. For example, the average length of the carbon nanotube raw material may be obtained by randomly selecting about 20 carbon nanotube raw materials from SEM or TEM image, measuring the lengths, and calculating an average value.

The pulverizing of the carbon nanotube raw material may be performed using a milling process. The milling process may use a method known to those skilled in the art. For example, the milling process may use a device such as a ball mill, a bead mill, a jet mill, a pin mill, a roller mill, a hybrid mill, a colloid mill, or an air classifier mill (ACM).

The carbon nanotube raw material may be pulverized using a ball milling method, and the ball milling may be performed using zirconia beads having a size of about 1 mm to about 25 mm at a speed of about 200 rpm to about 5,000 rpm for about 30 minutes to about 4 hours. The size of the zirconia beads used for pulverizing the carbon nanotube raw material may be about 1.2 mm to about 23 mm, about 1.3 mm to about 21 mm, or about 1.5 mm to about 20 mm. The pulverizing of the carbon nanotube raw material may be performed under conditions of about 250 rpm to about 4,500 rpm, about 300 rpm to about 4,000 rpm, about 400 rpm to about 3,000 rpm, or about 500 rpm to about 2,000 rpm. Additionally, the pulverizing of the carbon nanotube raw material may be performed for about 30 minutes to about 3 hours, or about 30 minutes to about 2 hours. When the size of the beads, the stirring speed, or the stirring time are in these ranges, the size of the carbon nanotubes may be controlled to the desired level.

The preparation of the carbon nanotubes may be performed separately from the step of preparing graphite particulates described above, and in the step of obtaining the positive electrode active material, the pulverized graphite particulates and the pulverized carbon nanotubes may be separately added. Alternatively, the preparing the carbon nanotubes may be performed during the step of preparing graphite particulates by co-pulverizing the carbon nanotube raw material having an average length of greater than or equal to about 40 µm together with flake graphite having an average size (D₅₀) of about 3 µm to about 25 µm. In this case, the graphite particulates and the carbon nanotubes may be complexed with each other so that the coating raw material may be prepared, and in the positive electrode active material, the graphene of the coating layers and the carbon nanotubes of the coating layers may both be in a single sheet plane.

When the carbon nanotubes are further mixed, based on a total of 100 wt% of the core particles, the graphite particulates, and the carbon nanotubes, the graphite particulates may be mixed in an amount of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.8 wt%, about 0.05 wt% to about 0.5 wt%, or about 0.05 wt% to about 0.1 wt%. When the amount of the graphite particulates is in these ranges, the pellet density and the conductivity of the positive electrode active material may be improved, and the rechargeable lithium battery including the positive electrode active material may exhibit high capacity and high energy density characteristics. Even if an amount of the graphite particulates is less than about 1 wt%, the graphene may be well coated on the surfaces of the core particles, thereby increasing the electrical conductivity of the positive electrode active material and increasing the density of the positive electrode.

Based on a total of 100 wt% of the core particles, the graphite particulates, and the carbon nanotubes, the carbon nanotubes may be mixed in an amount of about 0.02 wt% to about 3.0 wt%, for example, about 0.02 wt% to about 2.8 wt%, about 0.03 wt% to about 2.5 wt%, about 0.05 wt% to about 2.0 wt%, about 0.05 wt% to about 1.0 wt%, about 0.05 wt% to about 0.8 wt%, about 0.05 wt% to about 0.5 wt%, about 0.1 wt% to about 0.5 wt%, or about 0.2 wt% to about 0.4 wt%. When the amount of the carbon nanotubes are in these ranges, the pellet density and the conductivity of the positive electrode active material may be improved, and the rechargeable lithium battery including the positive electrode active material may have high capacity and high energy density characteristics. Even if an amount of the carbon nanotubes is less than about 1 wt%, the carbon nanotubes may be well coated on the surfaces of the core particles, thereby increasing the electrical conductivity of the positive electrode active material, and increasing the density of the positive electrode.

### Positive Electrode

In embodiments, a positive electrode includes a current collector and a positive electrode active material layer on the current collector, wherein the positive electrode active material layer includes the aforementioned positive electrode active material. The positive electrode active material layer may further include other types of positive electrode active materials in addition to the aforementioned positive electrode active material. Based on a total of 100 wt% of the positive electrode active material layer, the positive electrode active material may be included in an amount of about 60 wt% to about 99.9 wt%, about 70 wt% to about 99.9 wt%, about 80 wt% to about 99.9 wt%, about 90 wt% to about 99.9 wt%, or about 95 wt% to about 99.9 wt%.

Hereinafter, a configuration of the positive electrode according to some embodiments is described in detail.

### Current Collector

The current collector is not limited as long as it is conductive and does not cause undesirable chemical changes to the positive electrode and the rechargeable lithium battery including the current collector. For example, the current collector may include a thin film of aluminum (Al), stainless steel (SUS), indium (In), magnesium (Mg), titanium (Ti), iron (Fe), cobalt (Co), nickel (Ni), zinc (Zn), germanium (Ge), lithium (Li), or a combination thereof.

The shape of the current collector may be, for example, a plate, a thin body, a film, a sheet, a foil, a net, a porous body, a foam body, or a non-woven body. The current collector may include microscopic irregularities on its surface, which may improve adhesive strength to the positive electrode active material.

A thickness of the current collector may be about 1 µm to about 20 µm, for example about 5 µm to about 15 µm, or about 7 µm to about 10 µm.

The positive electrode active material layer may further include a binder, a conductive material, or a combination thereof.

### Binder

The binder serves to adhere the positive electrode active material particles to each other and to adhere the positive electrode active material to the current collector. The binder may include one or more of polyvinyl alcohol, carboxymethylcellulose, hydroxypropylcellulose, diacetylcellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, polyacrylonitrile, and nylon. But the present disclosure is not limited to these examples.

Based on a total of 100 wt% of the positive electrode active material layer, the binder may be included in an amount of about 0.1 wt% to about 1.5 wt%, for example, less than or equal to about 1.3 wt%, less than or equal to about 1.0 wt%, or less than or equal to about 0.9 wt%.

### Conductive Material

A conductive material is used to provide conductivity to an electrode, and any material that does not cause undesirable chemical changes and is electronically conductive may be used in the battery. The conductive material may include, for example, a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

Based on a total of 100 wt% of the positive electrode active material layer, the conductive material may be included in an amount of 0 to about 3 wt%, for example, about 0.05 wt% to about 3 wt%, less than or equal to about 2.5 wt%, less than or equal to about 2.0 wt%, less than or equal to about 1.0 wt%, less than or equal to about 0.8 wt%, less than or equal to about 0.7 wt%, or less than or equal to about 0.5 wt%. Because the positive electrode active material layer includes the aforementioned positive electrode active material, it may have excellent electronic conductivity and have low resistance and high density of the electrode active material layer even if it does not include a separate conductive material or includes a very small amount of conductive material.

A density of the positive electrode active material layer may be about 2.0 g/cc to about 6.0 g/cc, for example, about 2.3 g/cc to about 5.8 g/cc, about 2.5 g/cc to about 5.7 g/cc, or about 2.5 g/cc to about 5.5 g/cc. When the lithium transition metal composite compound of the core particles is a lithium cobalt-based oxide, a density of the positive electrode active material layer may be about 3.5 g/cc to about 5.0 g/cc, about 3.7 g/cc to about 4.9 g/cc, about 3.8 g/cc to about 4.8 g/cc, or about 4.0 g/cc to about 4.5 g/cc. When the density of the positive electrode active material layer is in these ranges, the energy density of the rechargeable lithium battery may be improved. Specifically, because the aforementioned positive electrode active material has high particle strength and provides good lubrication on the particle surfaces, the compression process may be performed at a higher pressure. In addition, because of the high lubrication on the surfaces of the positive electrode active material, the compression efficiency of the positive electrode may be increased by the sliding effect. In addition, because the compression process may be performed at a higher pressure, the pores in the positive electrode active material layer of the electrode plates may be reduced, and the density of the positive electrode active material layer may be further improved.

An adhesive strength of the positive electrode active material layer to the current collector may be greater than or equal to about 0.5 gf/mm, and the resistivity of the positive electrode active material layer may be less than or equal to about 40 Ω·cm. For example, the adhesive strength of the positive electrode active material layer to the current collector may be greater than or equal to about 1.0 gf/mm, greater than or equal to about 1.5 gf/mm, greater than or equal to about 2.0 gf/mm, or greater than or equal to about 2.5 gf/mm, and may be less than or equal to about 30 gf/mm, less than or equal to about 28 gf/mm, less than or equal to about 25 gf/mm, or less than or equal to about 23 gf/mm. Additionally, the resistivity of the positive electrode active material layer may be less than or equal to about 35 Ω·cm, less than or equal to about 30 Ω·cm, less than or equal to about 25 Ω·cm, or less than or equal to about 20 Ω·cm, and may be greater than or equal to about 0.5 Ω·cm, greater than or equal to about 1.0 Ω·cm, greater than or equal to about 3.0 Ω·cm, greater than or equal to about 5.0 Ω·cm, or greater than or equal to about 5.5 Ω·cm. Because the positive electrode active material layer includes the aforementioned positive electrode active material, the positive electrode active material layer can exhibit excellent electronic conductivity and implement low resistivity even if it does not include a separate conductive material or includes a very small amount of conductive material and may provide high electrode plate adhesive strength even if a small amount of binder is used.

A porosity of the positive electrode may be less than or equal to about 30%, less than or equal to about 25%, or less than or equal to about 20%, and greater than or equal to about 1%, greater than or equal to about 5%, or greater than or equal to about 7%. When the porosity of the positive electrode is in these ranges, the capacity and energy density of the positive electrode may be improved. Here, the porosity of the positive electrode means a ratio volume of of the pores present within the positive electrode to a total volume of the positive electrode. The porosity may be measured, for example, by mercury porosimetry.

### Rechargeable Lithium Battery

A rechargeable lithium battery according to example embodiments includes a positive electrode including a current collector and a positive electrode active material layer on the current collector, wherein the positive electrode active material layer includes the aforementioned positive electrode active material; a negative electrode; and an electrolyte. The rechargeable lithium battery may be a lithium ion battery using a liquid electrolyte, or an all-solid-state rechargeable lithium battery or a semi-solid rechargeable lithium battery using a solid electrolyte. The configuration of a lithium-ion battery is described in detail below.

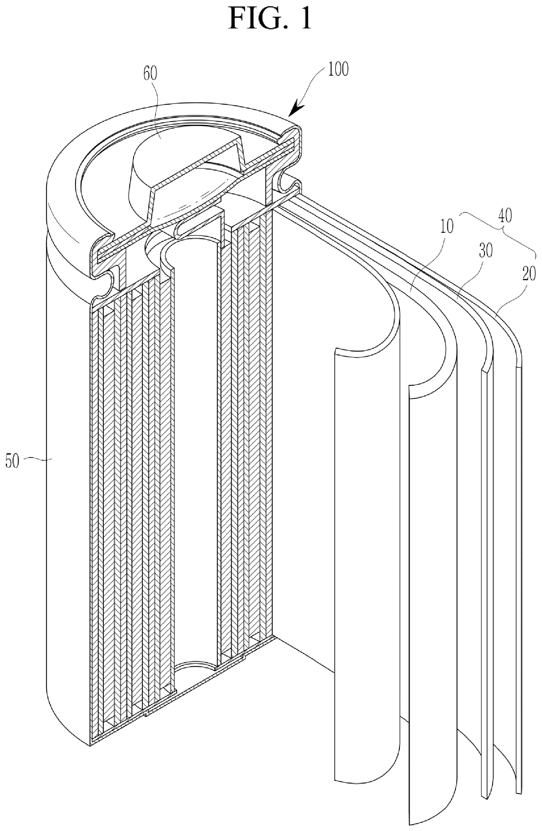

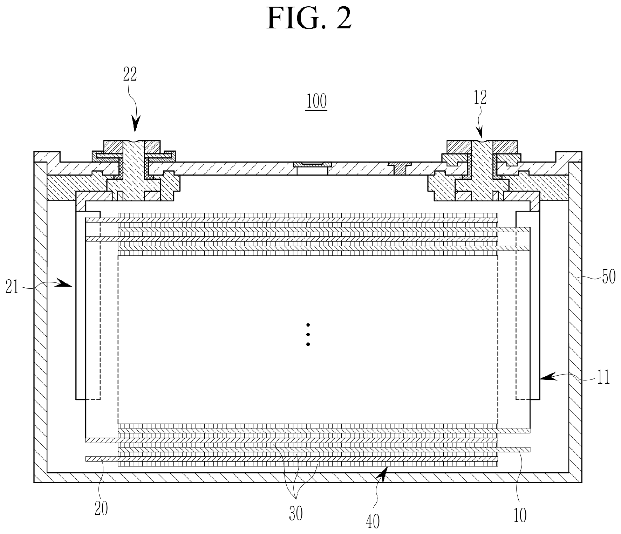

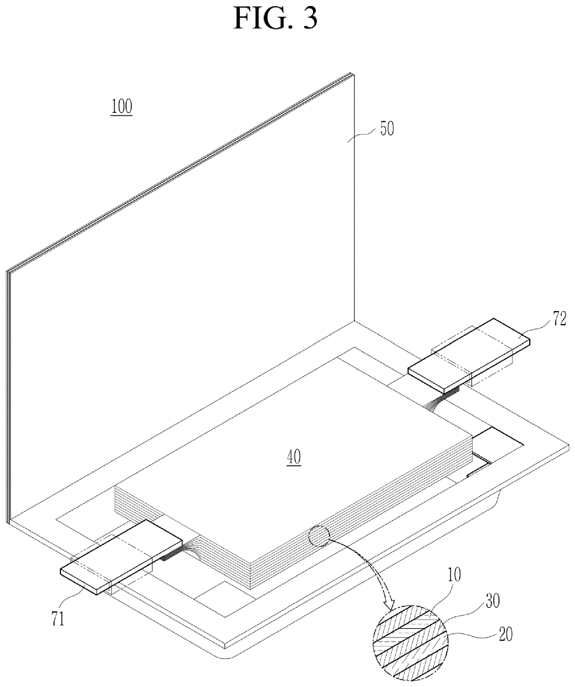

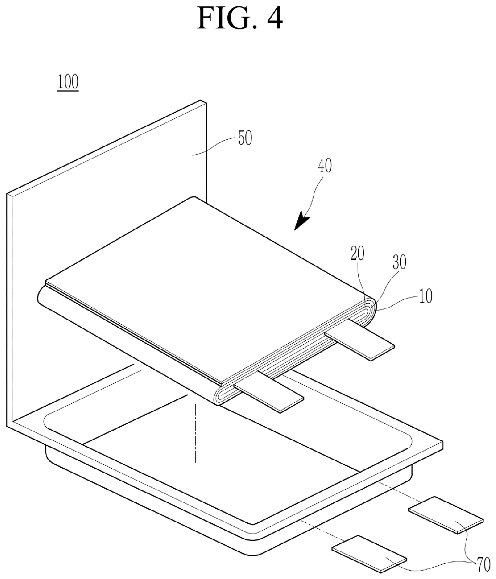

A rechargeable lithium battery may be cylindrical, prismatic, pouch, or coin-type batteries, and the like depending on its shape. FIG. 1 is a schematic view showing a cross-section of a cylindrical rechargeable lithium battery cut along a vertical axis and an electrode assembly 40 extending therefrom, FIG. 2 is a cross-sectional view of a prismatic rechargeable lithium battery, and FIGS. 3 and 4 are schematic exploded perspective views of pouch-type rechargeable lithium batteries. Referring to FIGS. 1 to 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown).

As shown in FIG. 1, the rechargeable lithium battery 100 may include a sealing member 60 that seals a case 50. As shown in FIG. 2, the rechargeable lithium battery 100 may include a positive electrode lead tab 11, a positive electrode terminal 12, a negative electrode lead tab 21, and a negative electrode terminal 22. The rechargeable lithium battery 100 may include an electrode tab 70 that forms an electrical path for conducting current provided in an electrode assembly 40. The electrode tab 70 may be disposed in the same direction as in FIG. 4, or the positive electrode tab 71 and the negative electrode tab 72 may be disposed in opposite directions as in FIG. 3.

### Negative Electrode

The negative electrode may include a current collector and a negative electrode active material layer on the current collector. The negative electrode active material layer includes a negative electrode active material and may further include a binder, a conductive material, or a combination thereof.

### Negative Electrode Active Material

The negative electrode active material includes a material capable of reversibly intercalating/deintercalating lithium ions, lithium metal, an alloy of lithium metal, a material capable of doping and dedoping lithium, or a transition metal oxide.

The material capable of reversibly intercalating/deintercalating lithium ions may include a carbon-based material such as crystalline carbon, amorphous carbon, or a combination thereof. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

As the alloy of lithium metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping and dedoping lithium may be a Si-based negative electrode active material or a Sn-based negative electrode active material. The Si-based negative electrode active material may be silicon, a silicon-carbon composite, SiOₓ (0<x≤2), a Si-Q alloy, or a combination thereof. In the formula Si-Q, Q is an alkali metal, an alkaline earth metal, a Group 13 element, a Group 14 element (excluding Si), a Group 15 element, a Group 16 element, a transition metal, a rare earth element, or a combination thereof, and for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. The Sn-based negative electrode active material may be Sn, SnO₂, a Sn-based alloy, or a combination thereof.

The silicon-carbon composite may be a composite of silicon and amorphous carbon. The average particle diameter (D₅₀) of the silicon-carbon composite particles may be, for example, about 0.5 µm to about 20 µm. According to some embodiments, the silicon-carbon composite may be in the form of silicon particles and amorphous carbon coated on the surfaces of the silicon particles. The silicon-carbon composite may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon, hard carbon, a mesophase pitch carbonized product, calcined coke, and the like.

When the silicon-carbon composite includes silicon and amorphous carbon, an amount of the silicon may be about 10 wt% to about 50 wt%, and an amount of the amorphous carbon may be about 50 wt% to about 90 wt% based on 100 wt% of the silicon-carbon composite. In addition, when the silicon-carbon composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt% based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may be present as silicon alone, in the form of a silicon alloy, or in an oxidized form. The oxidized form of the silicon may be represented as SiOₓ (0<x≤2). At this time, the atomic content ratio of Si:O, which indicates the degree of oxidation, may be about 99:1 to about 33:67.

The Si-based negative electrode active material or Sn-based negative electrode active material may be mixed with the carbon-based negative electrode active material. When a Si-based negative electrode active material or a Sn-based negative electrode active material is used in combination with a carbon-based negative electrode active material, a weight ratio of the Si-based negative electrode active material or the Sn-based negative electrode active material to the carbon-based negative electrode active material may be about 1:99 to about 90:10.

The negative electrode active material may be included in an amount of about 80 wt% to about 99 wt, for example, about 85 wt% to about 99 wt%, or about 90 wt% to about 99 wt% based on 100 wt% of the total negative electrode active material layer.

### Binder

The binder serves to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber, and may be, for example, polytetrafluoroethylene, polyvinylidene fluoride, a polyvinylidene fluoride-hexafluoropropylene copolymer, polyethylene oxide, or a combination thereof.

Based on 100 wt% of the total negative electrode active material layer, the binder may be included in an amount of about 0.5 wt% to about 5 wt%, for example, about 0.5 wt% to about 4 wt%, or about 1 wt% to about 3 wt%.

### Conductive Material

The conductive material is included to provide electrode conductivity and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The conductive material may be included in an amount of about 0.5 wt% to about 5 wt%, for example, about 0.5 wt% to about 4 wt%, or about 1 wt% to about 3 wt% based on 100 wt% of the total negative electrode active material layer.

### Current Collector

There is no particular limitation on the negative electrode current collector as long as it does not cause undesirable chemical changes in the negative electrode and the rechargeable lithium battery including the negative electrode. The negative electrode current collector can be, for example, a copper foil, a nickel foil, a stainless steel foil, a titanium foil, a nickel foam, a copper foam, a polymer substrate coated with a conductive metal, or a combination thereof.

The shape of the negative electrode current collector may be, for example, a plate, a thin body, a film, a sheet, a foil, a net, a porous body, a foam body, or a non-woven body. The negative electrode current collector may include microscopic irregularities on its surface, which may improve adhesive strength to the negative electrode active material.

A thickness of the negative electrode current collector may be about 1 µm to about 20 µm, for example, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, t-butyl acetate, methyl propionate, ethyl propionate, propyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like.

The ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types, and when two or more types are used in a mixture, a mixing ratio can be appropriately adjusted according to the desired battery performance, as is known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include one or more selected from LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within this range, the electrolyte solution has appropriate ionic conductivity and viscosity, and thus excellent performance can be achieved and lithium ions can move effectively.

### Separator

Depending on the type of rechargeable lithium battery, the rechargeable lithium battery may further include a separator between the positive and negative electrodes. The separator may include, for example, polyethylene, polypropylene, polyvinylidene fluoride, or a multilayer film of two or more layers thereof, and may include a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate, polybutylene terephthalate, and polyethylene naphthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, and polytetrafluoroethylene(PTFE; TEFLON^{®}), or a copolymer or mixture of two or more thereof. The porous substrate may include glass fibers, or may comprise a composite membrane of polymer and glass fibers.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, Ga₂O₃, ZnO, ZrO₂, Y₂O₃, SrTiO₃, BaTiO₃, Mg(OH)₂, boehmite, and a combination thereof, but the present disclosure is not limited thereto. An average particle diameter (D₅₀) of the inorganic particles may be from about 1 nm to about 2000 nm, for example, about 100 nm to about 1000 nm, or about 100 nm to about 700 nm. Here, the average particle diameter (D₅₀) of the inorganic particles may be obtained by randomly selecting 20 particles from a scanning electron microscope image of the inorganic particles, each particle being assumed to have a spherical shape and the measured size being converted into an equivalent spherical diameter, measuring their particle diameters (diameter, long diameter, or long axis length) to obtain a particle size distribution, and then taking the size of particles having a cumulative volume of 50 vol% from the particle size distribution as the average particle diameter.

The organic material and the inorganic material may be mixed in one coating layer. In other embodiments, a coating layer including an organic material and a coating layer including an inorganic material may be stacked. A thickness of the coating layer may be about 0.5 µm to about 20 µm, for example, about 1 µm to about 10 µm, or about 1 µm to about 5 µm.

The rechargeable lithium battery according to embodiments may be used in automobiles or various types of electrical devices such as mobile phones and the like. But the present disclosure is not limited to these examples.

Hereinafter, examples and comparative examples of the present invention are described. But the present disclosure is not limited to the following examples.

### Example 1

### (1) Preparation of Positive Electrode Active Material

(Preparation of Core Particles) Bimodal core particles were prepared by mixing lithium cobalt oxide (LCO, LiCoO₂) large particles having an average particle diameter (D₅₀) of 17 µm and lithium cobalt oxide (LCO, LiCoO₂) small particles having an average particle diameter (D₅₀) of 5 µm in a weight ratio of 7 : 3.

(Preparation of Graphite Particulate) Flake graphite (G5 (C-one), an average particle diameter (D₅₀): 3 µm, a ratio (I_{D}/I_{G}) of peak intensity (I_{D}) around 1350 cm⁻¹ to peak intensity (I_{G}) around 1580 cm⁻¹ in the Raman spectrum: 0.12) was mixed with ZrO₂ beads having a particle diameter of 2 mm, which was 10 times the weight of the flake graphite. Subsequently, the flake graphite was milled with the beads under a condition of 1,000 rpm for 1 hour to prepare graphite particulates. Herein, the graphite particulates had an average particle diameter (D₅₀) of 0.26 µm and a ratio (I_{D}/I_{G}) of peak intensity (I_{D}) around 1350 cm⁻¹ to peak intensity (I_{G}) around 1580 cm⁻¹ in the Raman spectrum of 0.28. In addition, 10 g of the graphite particulates was placed in a container, and while varying the applied pressure, pressurization was performed for 1 minute at each pressure, and the powder conductivity according to the applied pressure was measured. The powder conductivity of the graphite particulates was 4.4 S/cm at a pressure of 0.4 ton, and 12.9 S/cm at a pressure of 2 ton.

(Obtaining Positive Electrode Active Material) 99.8 wt% of the core particles and 0.2 wt% of the graphite particulates were put into a dry mixer. After adjusting a shear rate to 7,000 s⁻¹ and a rotation speed of a blade in the mixer to 4.7 m/s, the core particles and graphite particulates were mixed for 10 minutes to prepare a positive electrode active material.

### (2) Manufacturing of Positive Electrode

99.1 wt% of the positive electrode active material prepared in the (1), 0.2 wt% of carbon nanotube as a conductive material, and 0.7 wt% of polyvinylidene fluoride as a binder were dispersed in N-methylpyrrolidone (NMP) as a solvent to prepare a positive electrode active material slurry. The positive electrode active material slurry was coated on a 12 µm-thick aluminum substrate (current collector) and dried to form a positive electrode active material layer and then, compressed to manufacture a positive electrode. In the manufactured positive electrode, the positive electrode active material layer had a loading level of 16 mg/cm² and a density of 3.38 g/cc. Based on SEM analysis of the compressed positive electrode, the positive electrode active material layer had a thickness of about 50 µm.

### (3) Manufacturing of Rechargeable Lithium Battery Cell

The positive electrode manufactured in (2) above and lithium metal counter electrode were prepared, and a separator having a polyethylene polypropylene multilayer structure (SH812J22HL (Senior)) was interposed therebetween. An electrolyte solution prepared by adding 1.3 M LiPF₆ lithium salt to a solvent including ethylene carbonate, propylene carbonate, and propyl propionate mixed in a volume ratio of 10:15:75 was injected thereinto to manufacture a rechargeable lithium battery cell according to a conventional method.

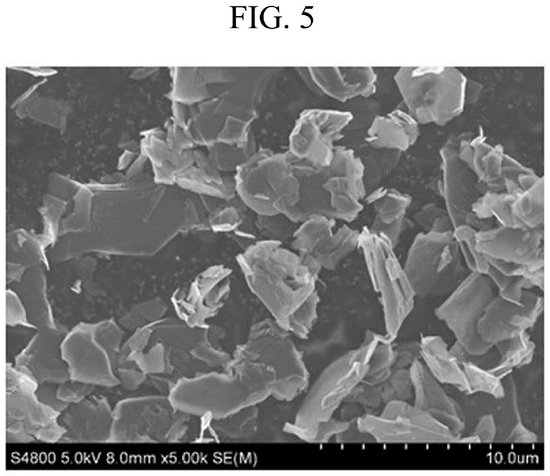

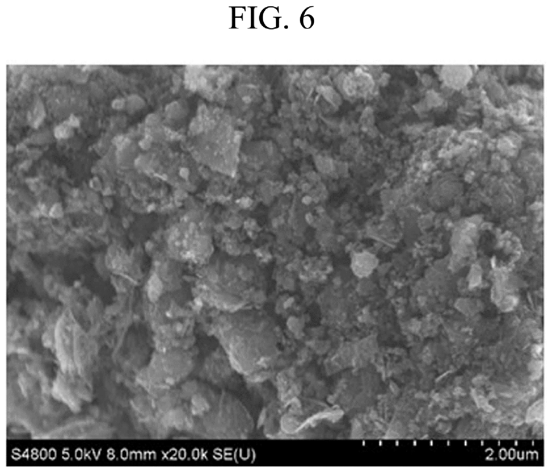

Images of the flake graphite and the graphite particulates used in (1) Preparation of Positive Electrode Active Material of Example 1 were taken with a scanning electron microscope (SEM), and the images are shown in FIGS. 5 and 6. Specifically, FIG. 5 is the scanning electron microscopic image of the flake graphite used in the preparation of the positive electrode active material of Example 1, and FIG. 6 is the scanning electron microscopic image of graphite particulates obtained by pulverizing the flake graphite.

Referring to FIGS. 5 and 6, it can be seen that the graphite particulates had a smaller average size (D₅₀) than the flake graphite.

### Example 2

A positive electrode active material, a positive electrode, and a rechargeable lithium battery cell were made in the same manner as in Example 1 except that the shear rate was changed to 4,700 s⁻¹ in the (1) Preparation of Positive Electrode Active Material of Example 1.

### Example 3

A positive electrode active material, a positive electrode, and a rechargeable lithium battery cell were made in the same manner as in Example 1 except that the shear rate was changed to 2,300 s⁻¹ in the (1) Preparation of Positive Electrode Active Material' of Example 1.

### Example 4

### (1) Preparation of Positive Electrode Active Material

Flake graphite (G5 (C-one), an average particle diameter (D₅₀): 3 µm, a ratio (I_{D}/I_{G}) of peak intensity (I_{D}) around 1350 cm⁻¹ to peak intensity (I_{G}) around 1580 cm⁻¹ in the Raman spectrum: 0.12) was mixed with ZrO₂ beads having a particle diameter of 5 mm, which was 10 times the weight of the flake graphite, and the flake graphite was pulverized under a condition of 500 rpm for 30 minutes to prepare graphite particulates having an average particle diameter (D₅₀) of 0.2 µm.

Separate from the preparation of the graphite particulates, TWCNT (average length: 40 µm) as a carbon nanotube raw material was mixed with ZrO₂ beads having a particle diameter of 5 mm, and the carbon nanotube raw material was pulverized under a condition of 500 rpm for 30 minutes to prepare a carbon nanotube having an average length of 10 µm. At this time, 10 g each of the carbon nanotube raw material and the carbon nanotube were placed in a container, pressurization was performed for 1 minute at varied pressure, and the powder conductivity according to the applied pressure was measured. The powder conductivity of the carbon nanotube raw material was 80.9 S/cm at a pressure of 0.4 ton, and 203.0 S/cm at a pressure of 2 ton. In addition, the powder conductivity of the carbon nanotube obtained by pulverizing the carbon nanotube raw material was 50.7 S/cm at a pressure of 0.4 ton, and 80.7 S/cm at a pressure of 2 ton.

Based on a total of 100 wt% of the prepared graphite particulates and the prepared carbon nanotubes, 17 wt% of graphite particulates and 83 wt% of carbon nanotubes were mixed to prepare the coating raw material.

After preparing core particles with an average particle diameter (D₅₀) of about 14 µm and having a composition of LiNi_{0.55}Co_{0.15}Mn_{0.30}O₂ (NCM) and in the form of secondary particles, 99.6 wt% of the core particles, and 0.4 wt% of the coating raw material were put into a mechanofusion apparatus. After mixing the core particles and the coating raw material at a shear rate of 2,700 s⁻¹ and a blade rotation speed of 4.7 m/s for 1 minute, the core particles and the coating raw material were dry mixed at a shear rate of 5,400 s⁻¹ and a blade rotation speed of 9.4 m/s for 14 minutes to prepare a positive electrode active material.

### (2) Manufacturing of Positive Electrode

96.1 wt% of the positive electrode active material prepared in the (1) above, 1.82 wt% of carbon nanotube and 0.78 wt% of carbon black as a conductive material, and 1.1 wt% of polyvinylidene fluoride and 0.2 wt% of polyacrylonitrile as a binder were dispersed in N-methylpyrrolidone (NMP) as a solvent to prepare a positive electrode active material slurry having a viscosity of 10,000 cps or less. The positive electrode active material slurry was coated on a 13.5 µm-thick aluminum substrate (current collector) and dried to provide a positive electrode active material layer and then compressed to make a positive electrode. In the positive electrode, the positive electrode active material layer had a loading level of 6.0 mg/cm² and a density of 3.0 g/cc.

### (3) Manufacturing of Rechargeable Lithium Battery Cell

The positive electrode manufactured in (2) above and lithium metal counter electrode were used, and a separator (SH812J22HL (Senior), thickness: 16 µm) having a polyethylene polypropylene multilayer structure was interposed therebetween. An electrolyte solution prepared by adding 1.15 M LiPF₆ lithium salt to a solvent including ethylene carbonate, ethyl methyl carbonate, and dimethyl carbonate mixed in a volume ratio of 20:40:40 was injected into the resultant structure to make a rechargeable lithium battery cell as in a conventional method.

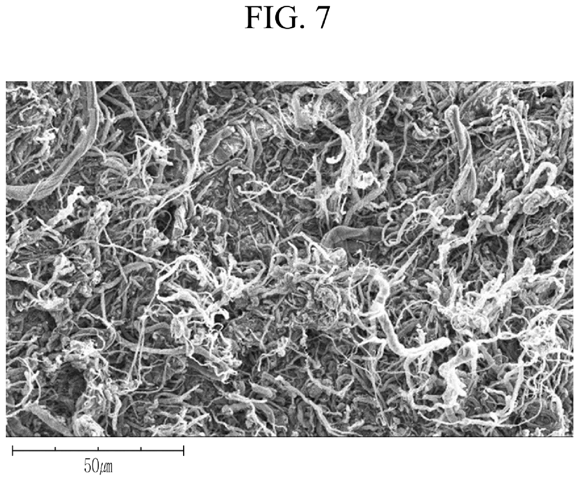

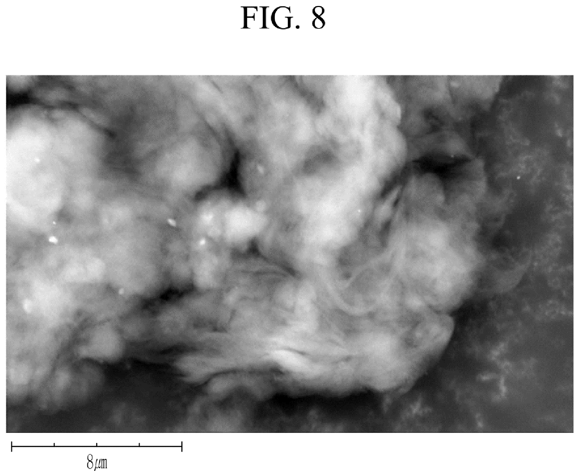

Images of the carbon nanotube raw material and the pulverized carbon nanotubes used in (1) Preparation of Positive Electrode Active Material of Example 4 were taken with a scanning electron microscope (SEM), and the images are shown in FIGS. 7 and 8. Specifically, FIG. 7 is the scanning electron microscope image of a surface of the carbon nanotube raw material used in the preparation of the positive electrode active material of Example 4, and FIG. 8 is the scanning electron microscope image of a surface of carbon nanotube obtained by pulverizing the carbon nanotube raw material.

Referring to FIGS. 7 and 8, it can be seen that the pulverized carbon nanotube had a smaller average length than the carbon nanotube raw material.

### Example 5

### (1) Preparation of Positive Electrode Active Material

Flake graphite (G5 (C-one), average particle diameter (D₅₀): 3 µm, a ratio (I_{D}/I_{G}) of peak intensity (I_{D}) around 1350 cm⁻¹ to peak intensity (I_{G}) around 1580 cm⁻¹ in the Raman spectrum: 0.12) and TWCNT (average length: 40 µm) as a carbon nanotube raw material were mixed with ZrO₂ beads having a particle diameter of 5 mm, which was 10 times the weight of the flake graphite. Subsequently, the flake graphite and carbon nanotube raw material were pulverized under a condition of 500 rpm for 30 minutes to prepare a coating raw material including graphite particulates having an average particle diameter (D₅₀) of 0.2 µm and carbon nanotubes having an average length of 10 µm, wherein the graphite particulates and the carbon nanotubes were complexed. 17 wt% of graphite particulates and 83 wt% of carbon nanotubes were mixed based on a total of 100 wt% of the graphite particulates and the carbon nanotube to prepare the coating raw material. 10 g of the coating raw material was placed in a container, and, while varying the applied pressure, pressurization was performed for 1 minute at each pressure. The powder conductivity according to the applied pressure was then measured. The powder conductivity of the coating raw material was 94.4 S/cm at a pressure of 0.4 ton, and 458.8 S/cm at a pressure of 2 ton.

After preparing core particles (average particle diameter (D₅₀): about 14 µm) having a composition of LiNi_{0.55}Co_{0.15}Mn_{0.30}O₂ and in the form of secondary particles, 99.6 wt% of the core particles and 0.4 wt% of the coating raw material were put into a mechanofusion apparatus. After mixing the core particles and the coating raw material at a shear rate of 2,700 s⁻¹ and a blade rotation speed of 4.7 m/s for 1 minute, the core particles and the coating raw material were dry mixed at a shear rate of 5,400 s⁻¹ and a blade rotation speed of 9.4 m/s for 14 minutes to prepare a positive electrode active material.

### (2) Manufacturing of Positive Electrode and Rechargeable Lithium Battery Cell

The positive electrode active material of Example 5 prepared in (1) above was used to manufacture a positive electrode and a rechargeable lithium battery cell in the same manner as in Example 4.

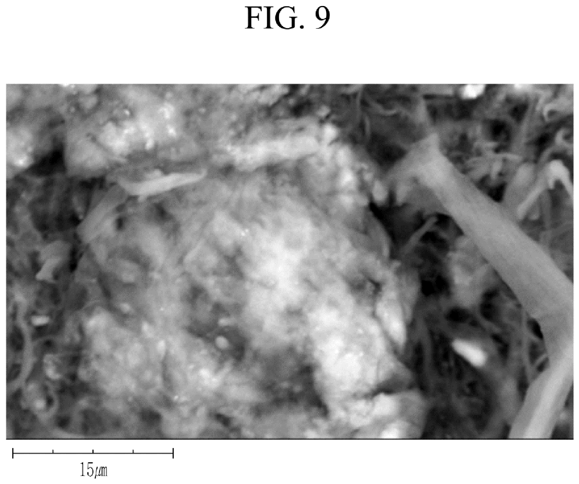

Images of the coating raw material used in (1) Preparation of Positive Electrode Active Material of Example 5 were taken with a scanning electron microscope (SEM), and the images are shown in FIG. 9. Specifically, FIG. 9 is the scanning electron microscope image of a surface of a coating raw material used in the preparation of the positive electrode active material of Example 5, in which graphite particulates and carbon nanotube are complexed.

Referring to FIG. 9, it can be seen that pulverization of the flake graphite and pulverization of the carbon nanotube raw material are performed together, thereby preparing the coating raw material in which the graphite particulates and the carbon nanotubes are complexed.

### Comparative Example 1

LiCoO₂(LCO) used in the (1) Preparation of Positive Electrode Active Material of Example 1 was prepared as a positive electrode active material. The prepared positive electrode active material was used to manufacture a positive electrode and a rechargeable lithium battery cell in the same manner as in Example 1.

### Comparative Example 2

A positive electrode and a rechargeable lithium battery cell were manufactured in the same manner as in Comparative Example 1 except that 98.9 wt% of the positive electrode active material (LCO), 0.2 wt% of the conductive material, and 0.9 wt% of the binder were mixed in the preparation method of Comparative Example 1.

### Comparative Example 3

A positive electrode active material, a positive electrode, and a rechargeable lithium battery cell were manufactured in the same manner as in Example 1 except that carbon nanotubes (Product name: Flotube 6807, Manufacturer: Cnano) instead of the graphite particulates were mixed with the core particles (amount of the core particles: 99.8 wt%, amount of the carbon nanotubes: 0.2 wt%) in the (1) Preparation of Positive Electrode Active Material of Example 1.

### Comparative Example 4

A positive electrode active material, a positive electrode, and a rechargeable lithium battery cell were manufactured in the same manner as in Example 1 except that Super P (Manufacturer: TIMCAL) instead of the graphite particulates was mixed with the core particles (amount of the core particles: 99.8 wt%, amount of the Super P: 0.2 wt%) in the (1) Preparation of Positive Electrode Active Material of Example 1.

### Comparative Example 5

A positive electrode active material, a positive electrode, and a rechargeable lithium battery cell were manufactured in the same manner as in Example 1 except that reduced graphene instead of the graphite particulates was mixed with the core particles (amount of the core particles: 99.8 wt%, an amount of the reduced graphene: 0.2 wt%) in the (1) Preparation of Positive Electrode Active Material of Example 1.

### Comparative Example 6

LiNi_{0.55}Co_{0.15}Mn_{0.30}O₂ used in the (1) Preparation of Positive Electrode Active Material of Example 4 was prepared as a positive electrode active material. The prepared positive electrode active material was used to manufacture a positive electrode and a rechargeable lithium battery cell in the same manner as in Example 4.

### Comparative Example 7

### (1) Preparation of Positive Electrode Active Material

After preparing core particles (average particle diameter (D₅₀): about 14 µm) having a composition of LiNi_{0.55}Co_{0.15}Mn_{0.30}O₂ and in the form of secondary particles, 99.6 wt% of the core particles and 0.4 wt% of TWCNT (average length: 40 µm) as a carbon nanotube raw material were put into a mechanofusion apparatus. After mixing the core particles and the carbon nanotube raw material at a shear rate of 2,700 s⁻¹ for 1 minute, the core particles and the carbon nanotube raw material were dry mixed at a shear rate of 5,400 s⁻¹ for 14 minutes to prepare a positive electrode active material.

### (2) Manufacturing of Positive Electrode and Rechargeable Lithium Battery Cell

The positive electrode active material of Comparative Example 7 prepared in (1) was used to manufacture a positive electrode and a rechargeable lithium battery cell in the same manner as in Example 4.

### Comparative Example 8

### (1) Preparation of Positive Electrode Active Material

TWCNT (average length: 40 µm) as a carbon nanotube raw material was mixed with ZrO₂ beads having a particle diameter of 5 mm. Subsequently, the carbon nanotube raw material was pulverized under a condition of 500 rpm for 30 minutes to prepare carbon nanotube having an average length of 10 µm,

After preparing core particles (an average particle diameter (D₅₀): about 14 µm) having a composition of LiNi_{0.55}Co_{0.15}Mn_{0.30}O₂ and in the form of secondary particles, 99.6 wt% of the core particles and 0.4 wt% of the carbon nanotube were put into a mechanofusion apparatus. After mixing the core particles and the carbon nanotube at a shear rate of 2,700 s⁻¹ for 1 minute, the core particles and the carbon nanotube were dry mixed at a shear rate of 5,400 s⁻¹ for 14 minutes to prepare a positive electrode active material.

### (2) Manufacturing of Positive Electrode and Rechargeable Lithium Battery Cell

The positive electrode active material of Comparative Example 8 prepared in (1) was used to manufacture a positive electrode and a rechargeable lithium battery cell in the same manner as in Example 4.

### Reference Example 1

A positive electrode and a rechargeable lithium battery cell were manufactured in the same manner as in Example 1 except that 98.7 wt% of the positive electrode active material, 0.4 wt% of the conductive material, and 0.9 wt% of the binder were mixed in the (2) Manufacturing of Positive Electrode of Example 1.

### Evaluation 1: Scanning Electron Microscope Image Analysis I

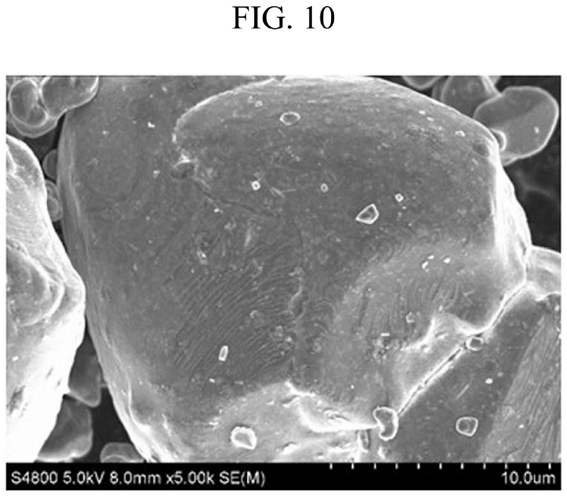

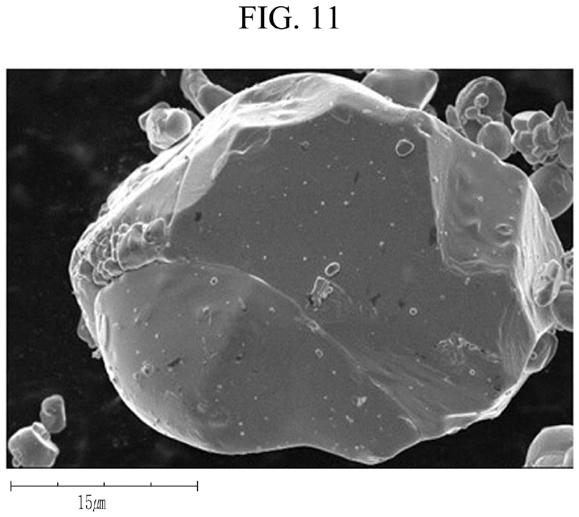

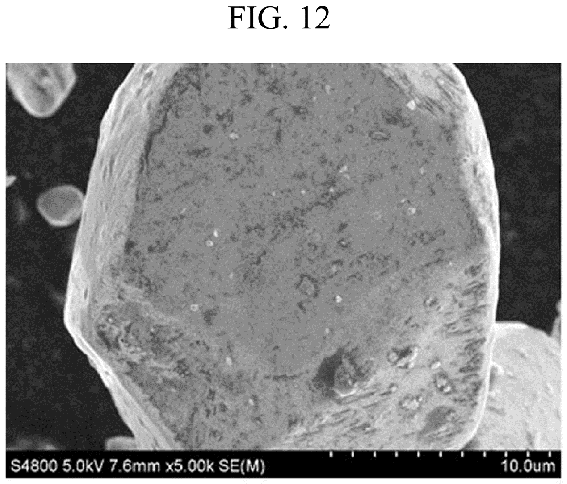

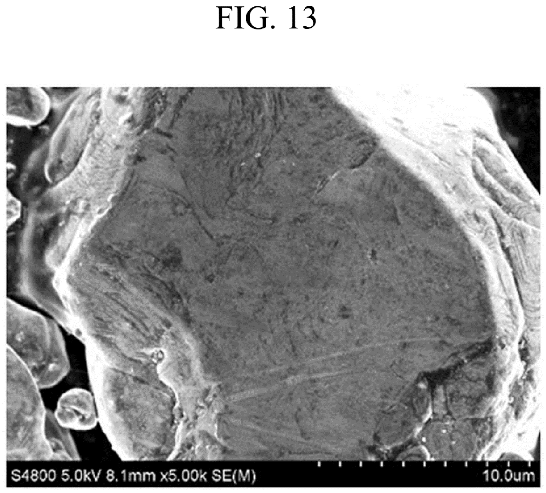

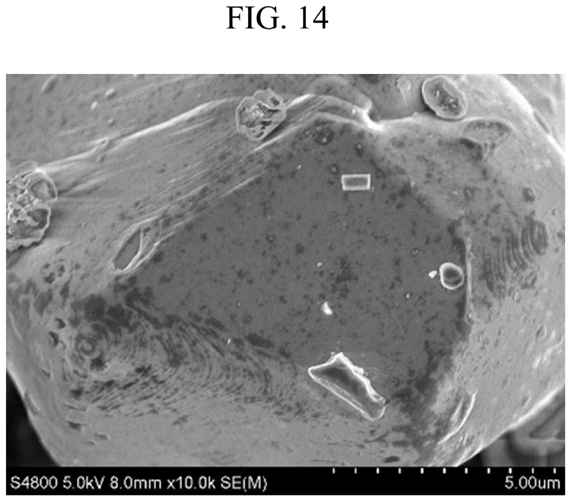

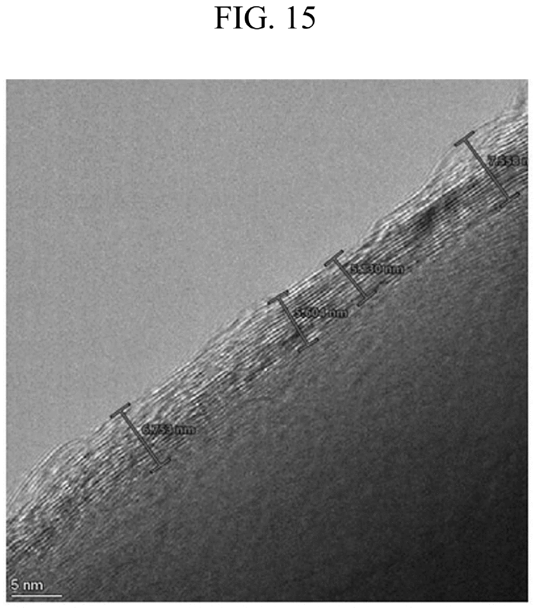

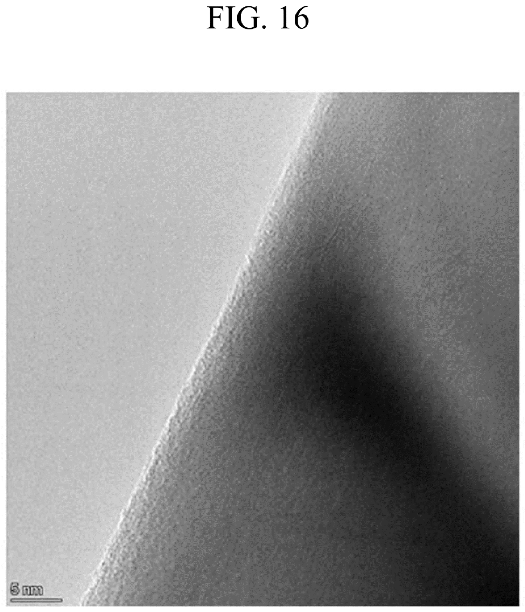

Images of the surfaces of the particles of the positive electrode active materials of Example 1 and Comparative Examples 1 and 3 to 5 were taken with a scanning electron microscope, and the images are shown in FIGS. 10 to 14. In addition, images of a cross-section of the coating layers in the positive electrode active materials of Example 1 and Comparative Example 1 were taken with a transmission electron microscope, and the images are sequentially shown in FIGS. 15 and 16.

Referring to FIGS. 10 to 16, it can be seen that the positive electrode active material of Example 1 had coating layers with a layered structure provided on the surfaces of the core particles unlike that of Comparative Example 1. In addition, the coating layer of Example 1 was very thin, had a uniform thickness, and continuously wrapped around the surfaces of the core particles.

On the other hand, it can be seen that Comparative Examples 3 to 5 were confirmed that coating layers were provided on the surfaces of the core particles but were nonuniform and only partially covered the surfaces of the core particles. In other words, the coating layers of Comparative Examples 3 to 5, which were derived from carbon nanotubes, Super P, and reduced graphene, were not uniform on the surfaces of the core particles.

### Evaluation 2: Coating Layer Analysis of Positive Electrode Active Material

The positive electrode active materials of Examples 1 to 3, Comparative Examples 1 to 5, and Reference Example 1 were analyzed with respect to the number of coating layers and thicknesses of the layers, and the results are shown in Table 1 below. The specific evaluation method was as follows.

The thicknesses of the layers and the number of the layers were measured by taking images of the cross-sections of the positive electrode active material particles with a scanning electron microscope at 20 points to calculate an arithmetic mean of the measurements.

### Evaluation 3: Analysis of Physical Properties of Positive Electrode

The positive electrodes of Examples 1 to 3, Comparative Examples 1 to 5, and Reference Example 1 were analyzed with respect to adhesive strength of positive electrode active material layer to current collector, resistivity of positive electrode active material layer, and density of positive electrode active material layers, and the results are shown in Table 1. Their specific evaluation methods were as follows.

### (1) Adhesive Strength of Positive Electrode Active Material Layer to Current Collector

Each of the positive electrodes was cut into a size of 25 mm×120 mm to prepare 20 specimens. After attaching a double-sided adhesive tape onto a glass substrate at room temperature, a positive electrode plate was attached onto the double-sided adhesive tape and then, roll-pressed. Subsequently, after folding one end of the positive electrode plate by 180°, one end of the positive electrode plate was pulled in its opposite direction to the other end at 0.5 mm/sec to measure a force applied thereto and thereby obtain the adhesive strength of positive electrode active material layer to current collector. The adhesive strength was determined as an average value of the 20 specimens.

### (2) Resistivity of Positive Electrode Active Material Layer

The positive electrodes were measured with respect to sheet resistance at contact by using RM2610 (Hioki Corporation, Japan) and remeasured with respect to the resistance 10 seconds later after the contact. Resistivity (expressed by reflecting a thickness factor in the electrode plate resistance) was calculated by reflecting a weight and a mixture density of a positive electrode mixture per unit area of each of the positive electrodes. Specifically, the thickness of the positive electrode material layer was directly measured using a micrometer, and the resistivity was calculated by the system by reflecting the measured thickness, the weight, and the mixture density of the positive electrode mixture per unit area for each electrode.

### (3) Density of Positive Electrode Active Material Layer

In each of the positive electrodes, density of a positive electrode active material layer was calculated by dividing a weight of components excluding a current collector by volume.

### Evaluation 4: Energy Density Analysis of Rechargeable Lithium Battery Cell

The rechargeable lithium battery cells of Examples 1 to 3, Comparative Examples 1 to 5, and Reference Example 1 were subjected to energy density analysis, and the results are shown in Table 1. The specific evaluation method was as follows.

The rechargeable lithium battery cells were initially charged under conditions of a constant current (0.35 C) and a constant voltage (4.56 V, 0.05 C cut-off) and discharged to 3.0 V at the constant current (0.35 C) at 25 °C for initial charge and discharge. The cells were measured with respect to initial discharge capacity.

In addition, the compressed electrode plate was punched to a diameter of 14 mm to measure a thickness and calculate density of a composite layer. Subsequently, the density of the composite layer was multiplied with a fraction of an active material and the initial discharge capacity to calculate energy density.

**(Table 1)**

| | | Composition of | | Composition of | | Coating layer | | Positive electrode | | Rech | |
|---|---|---|---|---|---|---|---|---|---|---|---|
| | positive electrode active material | | positive electrode active material slurry | | | | | | | | argeable lithium battery cell |
| | Type and amo unt of core parti cles | Type and amount of carbon material | Positive electrode active material (wt %) | Conduct ive material (wt %) | Binder (wt %) | Thickness of layer (nm) | The number of layers (layer) | Adhe sive stren gth of positi ve electr ode activ e mate rial layer (gf/m m) | Resi stivity of posi tive elec trode active mat erial layer (Ω·c m) | Density of positive electr ode active materi al layer (g/cc) | Energy density (mAh /cc) |
| | | | | | | | | | | | |
| Ex. 1 | LCO 99.8 wt% | graphite particulate 0.2 wt% | 99.1 | 0.2 | 0.7 | 9.1± 2.6 | 27±7 | 2.94 | 17.3 | 4.23 | 798.6 |
| Ex. 2 | LCO 99.8 wt% | graphite particulate 0.2 wt% | 99.1 | 0.2 | 0.7 | 10.1 ±1.6 | 31±5 | 2.73 | 22.2 | 4.22 | 798.8 |
| Ex. 3 | LCO 99.8 wt% | graphite particulate 0.2 wt% | 99.1 | 0.2 | 0.7 | 11.8 ±2.1 | 33±5 | 2.51 | 24.1 | 4.21 | 798.1 |
| Comp . Ex. 1 | LCO 100 wt% | - | 99.1 | 0.2 | 0.7 | - | - | 0.79 | 30.1 | - | - |
| Comp . Ex. 2 | LCO 100 wt% | - | 98.9 | 0.2 | 0.9 | - | - | 2.56 | 91.0 | - | - |
| Comp . Ex. 3 | LCO 99.8 wt% | CNT 0.2 wt% | 99.1 | 0.2 | 0.7 | 20±4 .3 | 1 | 1.20 | 34.5 | - | - |
| Comp . Ex. 4 | LCO 99.8 wt% | Super P 0.2 wt% | 99.1 | 0.2 | 0.7 | 27±3 .3 | 1 | 1.05 | 32.7 | - | - |
| Comp . Ex. 5 | LCO 99.8 | reduction graphene | 99.1 | 0.2 | 0.7 | 25±2 .8 | 1 | 1.18 | 28.4 | - | - |
| | wt% | 0.2 wt% | | | | | | | | | |
| Ref. Ex. 1 | LCO 99.8 wt% | graphite particulate 0.2 wt% | 98.7 | 0.4 | 0.9 | 9.1± 2.6 | 27±7 | 4.11 | 5.12 | 4.22 | 772. 4 |

Referring to Table 1, it can be seen that in Examples 1 to 3, coating layers containing graphene with a layered structure was provided on the surfaces of the core particles, wherein the coating layers had thicknesses from several nanometers to several tens of nanometers. In addition, as a result of analyzing the coating layers of the positive electrode active materials of Examples 1 to 3, the interlayer spacing (d₀₀₂) of the graphene layered structure was found to be 3.370 A in each of the positive electrode active materials.

In the coating layers containing layered graphene in Examples 1 to 3, there was high electrode plate contact force and low resistivity of positive electrode active material layer. Further, in Examples 1 to 3, the amount of the binder used in the manufacture of the positive electrodes was decreased and the amount of the positive electrode active material was increased. It can be seen that as a result the rechargeable lithium battery cells exhibited high energy density characteristics. In particular, Example 1, in which the binder and the conductive material were included in smaller amounts than in Reference Example 1, had excellent adhesive strength of positive electrode active material layer and resistivity of positive electrode active material layer, and also exhibited very high energy density.

On the other hand, Comparative Examples 1 and 2, in which a coating layer was not provided on the surface of the core particles, exhibited lower electrode plate contact force or higher resistivity of positive electrode active material layer than Examples 1 to 3. In addition, it was impossible to measure energy density of the rechargeable lithium battery cells of Comparative Examples 1 and 2 because these comparative examples had significantly low electrode plate contact force and/or significantly high resistivity of positive electrode active material layer.

In addition, Comparative Examples 3 and 4, in which coating layers were provided on the surfaces of the core particles but were derived from carbon nanotubes and Super P, contained amorphous carbon but had no layered structure of two or more layers. Accordingly, as compared to Examples 1 to 3, Comparative Examples 3 and 4 exhibited low electrode plate contact force and high resistivity of positive electrode active material layer.

In addition, Comparative Example 5, in which coating layers were provided on the surfaces of the core particles and the coating layer was derived from reduced graphene, had no layered structure of two or more layers. Accordingly, it was impossible to measure energy density for the rechargeable lithium battery cells of Comparative Example 5 because there was a lower electrode plate contact force and higher resistivity of positive electrode active material layer than Examples 1 to 3.

### Evaluation 5: Electron Microscope Image Analysis II

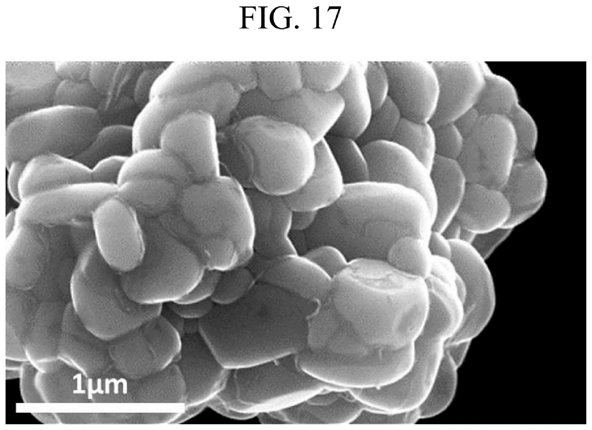

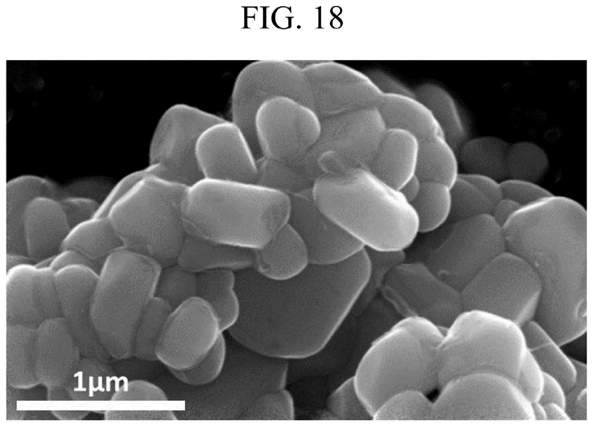

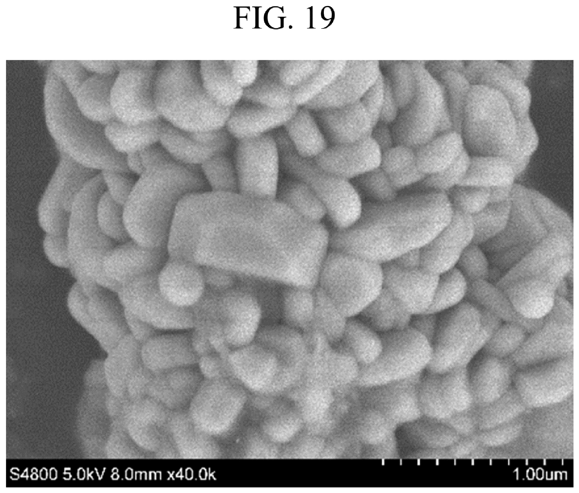

Images of the surfaces of particles of positive electrode active materials of Examples 4 and 5 and Comparative Example 6 were taken with a scanning electron microscope, and the images are shown in FIGS. 17 to 19.

Referring to FIGS. 17 to 19, it can be seen that, unlike that of Comparative Example 6, in the positive electrode active materials of Examples 4 and 5, coating layers were provided on the surfaces of the core particles. Further, the coating layers were thin and uniform and continuously wrapped around the surfaces of the core particles.

Further, cross-sections of the positive electrode active materials of Examples 4 and 5 were observed via transmission electron microscopy (TEM). The results confirmed that coating layers comprising graphene having a layered structure of two or more layers was formed on each of the positive electrode active materials.

### Evaluation 6: Performance Analysis of Rechargeable Lithium Battery Cell

The rechargeable lithium battery cells of Examples 4 and 5, and Comparative Examples 6 to 8 were subjected to performance analysis, and the results are shown in Table 2 below. Its specific evaluation method is as follows.

### (1) Initial Charge/discharge capacity and Efficiency

The rechargeable lithium battery cell was charged under conditions of a constant current (0.35 C) and a constant voltage (4.56 V, 0.05 C cut-off) and then discharged to 3.0 V under constant current (0.35 C) conditions at 25 °C for initial charging and discharging. The initial charge capacity and the initial discharge capacity were measured, and the ratio of the initial discharge capacity to the initial charge capacity was calculated as the initial efficiency.

### (2) Rate Characteristic (Output Characteristic)

After the initial charging and discharging of (1), the cell was charged at 1.0 C in a voltage range of 3.0 V to 4.3 V, and then discharged at 1.0 C or 30.0 C at 25 °C, and the capacity at each discharge rate was measured.

### (3) Cycle-life Characteristics

After the initial charging and discharging of (1), the cell was 50 cycles or more charged and discharged at 3.0 C within a voltage range of 3.0 V to 4.3 V at 25 °C. At this time, a ratio of 50th cycle discharge capacity to the initial discharge capacity was calculated.

**(Table 2)**

| | Positive electrode active material composition | | Method for preparing carbon material | Rechargeable lithium battery cell | | | | | |
|---|---|---|---|---|---|---|---|---|---|
| | Type and amount of core parti | Type and amount of carbon material | | Initial charge capacity (mA | Initial discharge capacity (mAh /g) | Initial efficiency (%) | Rate characteristic (mAh/g 1C/1C) | Rate characteristic (mAh/g , 1C/30 C) | Cycle-life characteristic (%, 25 °C, 50cyc) |
| | cles | | | h/g) | | | | | |
| Ex. 4 | NC M 99.6 wt% | graph ite partic ulate 0.068 wt% + CNT 0.332 wt% | Pulveri zing of flake graphit e and pulveri zing of CNT raw materia I perfor med separat ely, then mixing graphit e particul ate and CNT | 164. 8 | 126. 2 | 93.3 | 164.8 | 126.2 | 96.7 |
| Ex. 5 | NC M 99.6 wt% | graphite particulate 0.068 wt% + CNT 0.332 wt% | Simultaneous pulverizing of flake graphite and CNT raw material | 164.8 | 127.5 | 93.3 | 164.8 | 127.5 | 97.0 |
| Co mp . Ex. 6 | NC M 100 wt% | - | - | 163.2 | 121.2 | 93.0 | 163.2 | 121.2 | 96.2 |
| Co mp . Ex. 7 | NC M 99.6 wt% | CNT raw material 0.4 wt% | - | 161.1 | 123.3 | 92.3 | 161.1 | 123.3 | 96.2 |
| Co | NCA | CNT | - | 163. | 123. | 92.7 | 163.7 | 123.3 | 96.0 |
| mp . Ex. 8 | 99.8 wt% | 0.4 wt% | | 7 | 3 | | | | |

Referring to Table 2, it can be seen that Examples 4 and 5 exhibited high initial charge capacity, initial discharge capacity, and initial efficiency, and they also exhibited high rate characteristic and cycle-life characteristic.

On the other hand, in the case of Comparative Example 6, because a coating layer was not provided on the surfaces of the core particles, the comparative example exhibited lower initial efficiency, rate characteristic, and cycle-life characteristic compared to Examples 4 and 5.

In addition, because coating layers including only carbon nanotubes were provided on the surfaces of the core particles in Comparative Examples 7 and 8, they exhibited lower initial efficiency, rate characteristic, and cycle-life characteristic as compared to Examples 4 and 5.

While this disclosure has been described in connection with what is presently considered to be practical example embodiments, it is to be understood that the disclosure is not limited to the disclosed embodiments. The present disclosure includes various modifications and equivalent arrangements.

### <Description of Symbols>

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material comprising:
core particles including a lithium transition metal composite compound; and
coating layers disposed on the surfaces of the core particles, with each of the coating layers including graphene having a layered structure of 2 to 50 layers.

2. The positive electrode active material as claimed in claim 1, wherein
(a) the coating layers comprise graphene having a layered structure of 7 to 40 layers, and/or
(b) an interlayer spacing (d₀₀₂) of the layered structure is 0.320 nm to 0.350 nm, and/or
(c) thicknesses of the coating layers are 3 nm to 50 nm, and/or
(d) based on a total of 100 wt% of the positive electrode active material, the graphene of the coating layer is included in an amount of 0.02 wt% to 3.0 wt%.

3. The positive electrode active material as claimed in claim 1 or claim 2, wherein the coating layers further include carbon nanotubes.

4. The positive electrode active material as claimed in any one of claims 1 to 3, wherein the graphene in the coating layers is derived from graphite particulates having an average size (D₅₀) of less than or equal to 2.5 µm.

5. The positive electrode active material as claimed in any one of claims 1 to 4, wherein the graphene in the coating layers has a ratio (I_{D}/I_{G}) of the peak intensity (I_{D}) around 1350 cm⁻¹ to the peak intensity (I_{G}) around 1580 cm⁻¹ in a Raman spectrum of 0.15 to 0.50.

6. The positive electrode active material as claimed in any one of claims 1 to 5, wherein the core particles comprise a lithium cobalt-based oxide represented by Chemical Formula 1 or a lithium nickel-based oxide represented by Chemical Formula 2,
wherein Chemical Formula 1 is:
Liₐ₁Coₓ₁M¹_{y1}O_{2-b1}X_{b1}
where 0.9≤a1≤1.8, 0.7≤x1≤1, 0≤y1≤0.3, 0.9≤x1+y1≤1.1, and 0≤b1≤0.1, M¹ is at least one of Al, B, Ba, Ca, Ce, Cr, Cu, Fe, Mg, Mn, Mo, Ni, Se, Si, Sn, Sr, Ti, V, W, Y, Zn, and Zr, and X is at least one of F, P, and S, and
wherein Chemical Formula 2 is:
Liₐ₂Niₓ₂M²_{y2}M³_{z2}O_{2-b2}X_{b2}
where 0.9≤a2≤1.8, 0.3≤x2≤1, 0≤y2≤0.7, 0≤z2≤0.7, 0.9≤x2+y2+z2≤1.1, and 0≤b2≤0.1, M² and M³ are each at least one of Al, B, Ba, Ca, Ce, Co, Cr, Cu, Fe, Mg, Mn, Mo, Nb, Si, Sn, Sr, Ti, V, Y, W, and Zr, and X is at least one of F, P, and S.

7. A method of preparing a positive electrode active material, the method comprising:
preparing core particles including a lithium transition metal composite compound;
preparing graphite particulates having an average size (D₅₀) of less than or equal to 2.5 µm; and
dry mixing the core particles and the graphite particulates to obtain a positive electrode active material.

8. The method as claimed in claim 7, wherein the preparing of the graphite particulates comprises pulverizing flake graphite having an average size (D₅₀) of 3 µm to 25 µm to prepare graphite particulates having an average size (D₅₀) of less than or equal to 2.5 µm.

9. The method as claimed in claim 8, wherein the pulverizing of the flake graphite is performed using ball milling, and
wherein the ball milling is performed using zirconia beads having a size of 1 mm to 25 mm at a speed of 200 rpm to 5,000 rpm for 30 minutes to 4 hours.

10. The method as claimed in any one of claims 7 to 9, wherein
(a) the graphite particulates have a ratio (I_{D}/I_{G}) of the peak intensity (I_{D}) around 1350 cm⁻¹ to the peak intensity (I_{G}) around 1580 cm⁻¹ in a Raman spectrum of 0.15 to 0.50, and/or
(b) based on 100 wt% of a total of the core particles and the graphite particulates, the graphite particulates are mixed in an amount of 0.02 wt% to 3.0 wt%, and/or
(c) the obtaining of the positive electrode active material is dry mixing the core particles and the graphite particulates using a dry mixer, the core particles and the graphite particulates are mixed at a shear rate of 1,000 s⁻¹ to 9,000 s⁻¹ and a blade rotation speed of less than or equal to 20 m/s.

11. The method as claimed in claim 7, wherein, in obtaining the positive electrode active material, carbon nanotubes are further mixed with the core particles and the graphite particulates.

12. The method as claimed in claim 11, further including preparing the carbon nanotubes having an average length of 0.1 µm to 35 µm by pulverizing carbon nanotube raw material having an average length of greater than or equal to 40 µm,
wherein the preparing the carbon nanotubes is performed during the step of preparing the graphite particulates by co-pulverizing the carbon nanotube raw material having an average length of greater than or equal to 40 µm together with flake graphite having an average size (D₅₀) of 3 µm to 25 µm, or the preparing the carbon nanotubes and the preparing the graphite particulates are performed separately.

13. A rechargeable lithium battery comprising:
a positive electrode including:
a current collector, and
a positive electrode active material layer on the current collector,
wherein the positive electrode active material layer comprises the positive electrode active material as claimed in any one of claims 1 to 6;
a negative electrode; and
an electrolyte.

14. The rechargeable lithium battery as claimed in claim 13, wherein the positive electrode active material layer further comprises a binder and a conductive material,
wherein, based on a total of 100 wt% of the positive electrode active material layer, the binder is included in an amount of 0.1 wt% to 1.5 wt%, and the conductive material is included in an amount of 0 to 3 wt%.

15. The rechargeable lithium battery as claimed in claim 13 or claim 14, wherein an adhesive strength of the positive electrode active material layer to the current collector is greater than or equal to 0.5 gf/mm, and
wherein a resistivity of the positive electrode active material layer is less than or equal to 40 Ω·cm.
